# EUROPEAN PATENT APPLICATION

(11) **EP 4 112 308 A1**
(43) Date of publication of application: **04.01.2023**
(21) Application number: 21760126.9
(22) Date of filing: 26.01.2021
(51) Int. Cl.: B41J 2/01, C09D 11/037, C09D 11/322, C09D 11/54, B41M 5/00

(54) **INK COMPOSITION, INK SET, AND IMAGE RECORDING METHOD**

(30) Priority: 28.02.2020 JP 2020034206; 28.08.2020 JP 2020145007
(71) Applicant: FUJIFILM Corporation, Tokyo 106-8620 (JP)
(72) Inventor: HAMADA Naoka, Ashigarakami-gun, Kanagawa 258-8577 (JP); KAERIYAMA Atsushi, Ashigarakami-gun, Kanagawa 258-8577 (JP); SUZUKI Shota, Ashigarakami-gun, Kanagawa 258-8577 (JP); TAMAKUNI Fumiko, Ashigarakami-gun, Kanagawa 258-8577 (JP)
(74) Representative: Klunker IP Patentanwälte PartG mbB
(86) International application number: PCT/JP2021/002676
(87) International publication number: WO 2021/171875

(57) **Abstract**

To provide an ink composition, an ink set, and an image recording method capable of recording an image in which bleeding and blocking are suppressed. An ink composition including water, a pigment, a pigment dispersion polymer A, and a water-soluble polymer B different from the pigment dispersion polymer A, in which the water-soluble polymer B contains a specific acid group and a constitutional unit represented by Formula (1), an ink set, and an image recording method. R¹, R¹¹, Y¹, and Y² each independently represent a hydrogen atom or a monovalent substituent, and L¹ and L² each independently represent a divalent linking group or a single bond. Y¹ and Y² may be bonded to each other to form a nitrogen-containing heterocycle with L¹, L², and N.

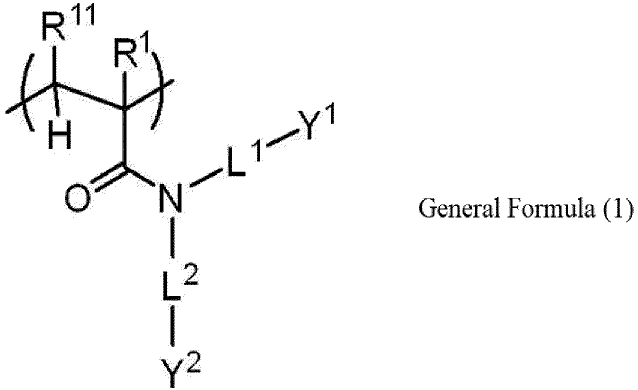

## Description

### BACKGROUND OF THE INVENTION

### 1. Field of the Invention

The present disclosure relates to an ink composition, an ink set, and an image recording method.

### 2. Description of the Related Art

As an image recording method on a recording medium such as paper, methods using an electrophotographic method, a sublimation-type or melt-type thermal transfer method, an ink jet method, and the like has been widely known. Among these, for reasons that no printing plate is required, an ink can be selectively jetted to a desired portion to enable recording, and the like, a recording method using the ink jet method (hereinafter, referred to as an ink jet recording method) has various advantages that running cost is low, a device is relatively inexpensive as compared with a recording device using another method, and it is possible to reduce the size and noise.

As the ink jet recording method, a method for directly applying an ink to a recording medium to record an image, and a method for applying a treatment liquid that acts on components in an ink to a recording medium in advance and applying the ink to record an image have been known.

As the former method, it is disclosed in various documents that, for example, an ink for ink jet, which contains a resin A having a carboxy group and a resin B having a carboxy group and dispersing a pigment (for example, see JP2012-122060A), and an ink composition for ink jet, which contains particles of a polymer compound containing a copolymer that contains a repeating unit derived from a hydrophilic monomer, a water-soluble polymer, a colorant, water, and the like (for example, see JP2013-159689A). In the related art, a composition containing a water-soluble polymer in an ink has also been proposed.

On the other hand, the latter method has an advantage that it is possible to record a higher-definition image at a higher speed than the former method.

For example, in JP6432895B, an image recording method using an ink set containing an aqueous ink composition containing an aqueous medium, resin fine particles composed of a resin, and a pigment, and a treatment agent for aggregating an ink composition is disclosed.

### SUMMARY OF THE INVENTION

In the related art, for example, as in JP6432895B, an aggregated state of the aqueous ink composition containing the resin fine particles is not uniform in a case where the treatment agent acts during the recording, depending on a content of the resin fine particles and the like, so that partially unnecessary shades of color may appear in the image as grainy or streaky defects. The shades of color in the image may be one of causes of deteriorating the quality of an image. For example, in a case where an image is recorded by an ink jet method, a plurality of ink droplets for forming an image tend to interfere with each other. In a case where ink droplets of the plurality of ink droplets that interfere with each other partially move or coalesce, unplanned shades of color appear in the image. As a result, "bleeding" that appears as a feeling of roughness in an image, uneven density, or the like may occur.

In addition, in the image recording method, there may be a demand for suppressing the recorded image blocking.

Here, the blocking means a phenomenon in which a contacted object sticks to an image in a case where the contacted object (for example, an object on which an image is recorded, a medium subjected to recording, or the like) is overlapped on the image.

The present disclosure has been made in view of the above description.

An object to be solved by an embodiment of the present disclosure is to provide an ink composition, an ink set, and an image recording method capable of recording an image in which bleeding and blocking are suppressed.

The "bleeding" in the present disclosure includes shades of color visually observed as spots or granules, shades of color visually observed as linear or streaky, and the like.

The specific means for achieving the above-described object includes the following aspects.
<1> An ink composition comprising water, a pigment, a pigment dispersion polymer A, and, a water-soluble polymer B different from the pigment dispersion polymer A,
   in which the water-soluble polymer B contains at least one acid group selected from the group consisting of a phosphoric acid group, a sulfonic acid group, and a carboxylic acid group, and a constitutional unit represented by General Formula (1), 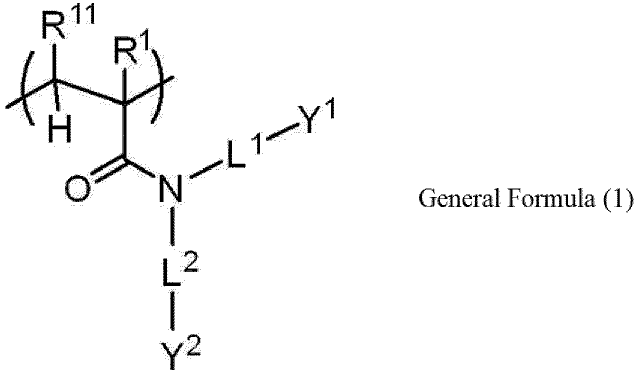
   in the Formula, R¹ represents a hydrogen atom or a methyl group,
      R¹¹ represents a hydrogen atom, a carboxylic acid group, or a carbamoyl group,
      L¹ and L² each independently represent a divalent linking group that is one kind selected from the group A consisting of an alkylene group, an alkenylene group, an alkynylene group, -O-, and -C(=O)-, a divalent linking group that is obtained by combining two or more kinds selected from the group A, or a single bond,
      Y¹ and Y² each independent represent a hydrogen atom, -OH, -R², -OR², -NH₂, -NHR², -NR²R³, or -SH,
      R² and R³ each independently represent an alkyl group, an alkenyl group, an alkynyl group, or an aryl group, and
      Y¹ and Y² may be bonded to each other to form a nitrogen-containing heterocycle with L¹, L², and N.
<2> The ink composition according to <1>, in which the water-soluble polymer B further contains at least one constitutional unit selected from the group consisting of a constitutional unit represented by General Formula (A) and a constitutional unit represented by General Formula (B), 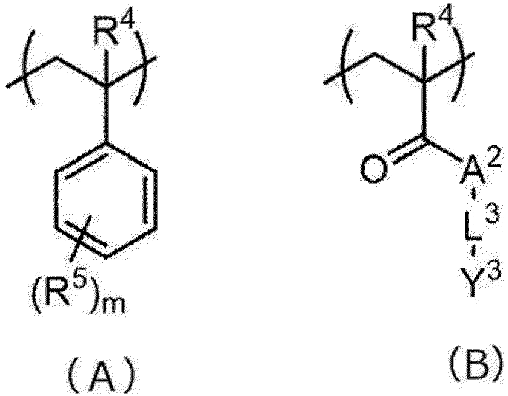 in the Formulae, R⁴'s each independently represent a hydrogen atom or a methyl group,
   R⁵'s each independently represent an alkyl group, an alkenyl group, or an alkynyl group,
   m is an integer of 0 to 5,
   A² represents a single bond or -O-,
   L³ represents a divalent linking group that is one kind selected from the group B consisting of an alkylene group, an alkenylene group, an alkynylene group, -O-, and -C(=O)-, a divalent linking group that is obtained by combining two or more kinds selected from the group B, or a single bond, and
   Y³ represents an alkyl group having 4 to 22 carbon atoms, an alkenyl group having 4 to 22 carbon atoms, an alkynyl group having 4 to 22 carbon atoms, a cycloalkyl group having 4 to 22 carbon atoms, or an aryl group having 6 to 22 carbon atoms.
<3> The ink composition according to <2>, in which the water-soluble polymer B contains, as the constitutional unit represented by General Formula (A) or General Formula (B), at least one constitutional unit selected from the group consisting of a constitutional unit represented by General Formula (a) and a constitutional unit represented by any one of General Formulae (b-1), (b-2), (b-3), or (b-4), 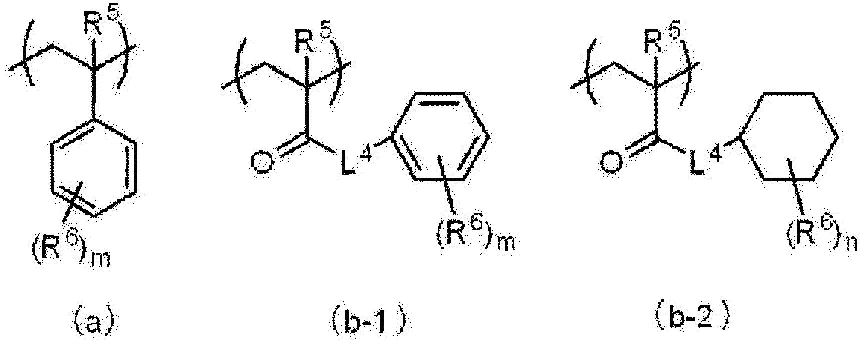 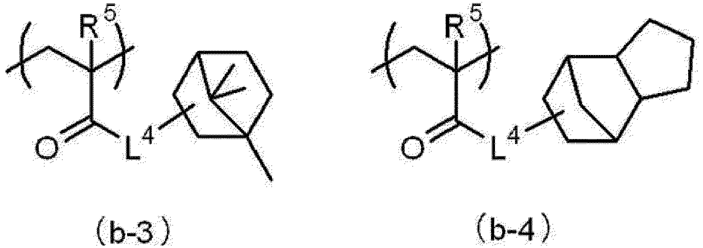 in the Formulae, R⁵'s each independently represent a hydrogen atom or a methyl group,
   R⁶'s each independently represent an alkyl group, m represents an integer of 0 to 5, and n represents an integer of 0 to 11, and
   L⁴'s each independently represent a divalent linking group that is one kind selected from the group C consisting of an alkylene group having 1 to 18 carbon atoms, -O-, and -C(=O)-, a divalent linking group that is obtained by combining two or more kinds selected from the group C, or a single bond.
<4> The ink composition according to <3>, in which a total content ratio of the constitutional unit represented by General Formula (a) and the constitutional unit represented by any one of General Formulae (b-1), (b-2), (b-3), or (b-4) in the water-soluble polymer B is 5% by mass to 50% by mass with respect to all constitutional units of the water-soluble polymer B.
<5> The ink composition according to any one of <1> to <4>, in which a content of the water-soluble polymer B is 1% by mass to 10% by mass with respect to a total mass of the ink composition.
<6> The ink composition according to any one of <1> to <5>, in which a weight-average molecular weight of the water-soluble polymer B is 5,000 to 100,000.
<7> The ink composition according to any one of <1> to <6>, in which an acid value of the water-soluble polymer B is 28 mgKOH/g to 230 mgKOH/g.
<8> The ink composition according to any one of <1> to <7>, in which the water-soluble polymer B contains a carboxylic acid group as the acid group, and
   40% by mol or more of the carboxylic acid group is neutralized with a base.
<9> The ink composition according to <8>, in which the base is a hydroxide of an alkali metal or an organic amine having a boiling point of 80°C or higher.
<10> The ink composition according to any one of <1> to <9>, in which a content ratio of the constitutional unit represented by General Formula (1) in the water-soluble polymer B is 3% by mass to 45% by mass with respect to all constitutional units of the water-soluble polymer B.
<11> The ink composition according to any one of <1> to <10>, in which the water-soluble polymer B has a glass transition temperature of 80°C or higher.
<12> The ink composition according to any one of <1> to <11>, in which the ink composition further contains a water-soluble organic solvent,
   the water-soluble organic solvent contains a first organic solvent having a boiling point of 110°C to 240°C, and a second organic solvent having a boiling point of 245°C to 300°C, and
   a mass ratio of a content of the second organic solvent to a content of the first organic solvent is 0 to 0.3.
<13> The ink composition according to <12>, in which a total amount of the first organic solvent and the second organic solvent is 5% by mass to 30% by mass with respect to a total mass of the ink composition.
<14> The ink composition according to <12> or <13>, in which each of the first organic solvent and the second organic solvent is at least one alcohol-based organic solvent selected from the group consisting of ethylene glycol, diethylene glycol, propylene glycol, triethylene glycol, dipropylene glycol, glycerin, and an alkyl ether thereof, and
   a ratio of the alcohol-based organic solvent to a total amount of the first organic solvent and the second organic solvent is 90% by mass or more.
<15> An ink set comprising the ink composition according to any one of <1> to <14>, and
   a treatment liquid that contains water and at least one selected from the group consisting of a polyvalent metal salt, an acidic compound, and a cationic polymer,
<16> The ink set according to <15>, in which the acidic compound contains a monovalent, divalent, or trivalent acid.
<17> An image recording method comprising a step of applying the ink composition according to any one of <1> to <14> to record an image on a recording medium.

According to the embodiment of the present disclosure, an ink composition, an ink set, and an image recording method capable of recording an image in which bleeding and blocking are suppressed are provided.

### DESCRIPTION OF THE PREFERRED EMBODIMENTS

Hereinafter, the contents of the present disclosure will be described in detail.

The configuration requirements will be described below based on the representative embodiments of the present disclosure, but the present disclosure is not limited to such embodiments.

In the present disclosure, a term "to" showing a range of numerical values is used as a meaning including a lower limit value and an upper limit value disclosed before and after the term.

In a range of numerical values described in stages in the present disclosure, the upper limit value or the lower limit value described in one range of numerical values may be replaced with an upper limit value or a lower limit value of the range of numerical values described in other stages. In addition, in a range of numerical values described in the present disclosure, the upper limit value or the lower limit value of the range of numerical values may be replaced with values shown in the examples.

In the present specification, in a case where a plurality of substances corresponding to individual components are present in a composition, unless otherwise specified, the amount of each component in the composition means the total amount of the plurality of components present in the composition.

The term "solid content" in the present specification means a component excluding a solvent, and a liquid component such as a low molecular weight component other than a solvent is also included in the "solid content" in the present specification.

The term "solvent" in the present specification is used to include water, an organic solvent, and a mixed solvent of water and an organic solvent.

In the present specification, either or both of acrylic and methacrylic may be referred to as "(meth)acrylic". For example, "(meth)acrylic acid" includes both acrylic acid and methacrylic acid.

In the present specification, the term "step" includes not only an independent step but also a step provided that the intended purpose of the step is achieved even in a case where the step cannot be clearly distinguished from other steps.

Compounds not specified as substituted or unsubstituted in the present disclosure may have any substituent as long as the effects in the present disclosure are not impaired.

In the present disclosure, a combination of two or more preferable aspects is the more preferable aspect.

The weight-average molecular weight (Mw) in the present disclosure is measured by gel permeation chromatography (GPC).

HLC-8220GPC (manufactured by TOSOH CORPORATION) is used as the GPC, three columns, TSKgeL Super HZ2000, TSKgeL Super HZ4000, and TSKgeL Super HZ-H (all manufactured by TOSOH CORPORATION, 4.6 mm × 15 cm) are connected in series, and NMP (N-methylpyrrolidone) is used as an eluent. The sample concentration is 0.3% by mass, the flow rate is 0.35 ml/min, the sample injection amount is 10 µL, the measurement temperature is 40°C, and the refractive index (RI) detector (differential refractive index detector) is used as a detector. The calibration curve is prepared using 6 samples of "F-80", "F-20", "F-4", "F-2", "A-5000", and "A-1000", which are "Standard Samples TSK standard, polystyrene" manufactured by TOSOH CORPORATION.

### <Ink Composition>

The ink composition of the present disclosure contains water, the pigment, the pigment dispersion polymer A, and the water-soluble polymer B different from the pigment dispersion polymer A. The ink composition of the present disclosure may further contain other components, as necessary.

The water-soluble polymer B contains at least one acid group selected from the group consisting of a phosphoric acid group, a sulfonic acid group, and a carboxylic acid group, and a constitutional unit represented by General Formula (1).

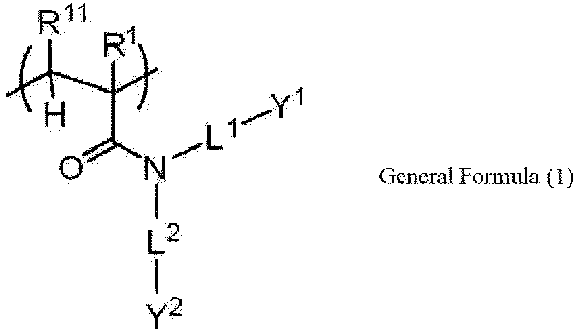

In General Formula (1), R¹ represents a hydrogen atom or a methyl group.

R¹¹ represents a hydrogen atom, a carboxylic acid group, or a carbamoyl group.

L¹ and L² each independently represent a divalent linking group that is one kind selected from the group A consisting of an alkylene group, an alkenylene group, an alkynylene group, -O-, and -C(=O)-, a divalent linking group that is obtained by combining two or more kinds selected from the group A, or a single bond.

Y¹ and Y² each independent represent a hydrogen atom, -OH, -R², -OR², -NH₂, -NHR², -NR²R³, or -SH.

R² and R³ each independently represent an alkyl group, an alkenyl group, an alkynyl group, or an aryl group.

Y¹ and Y² may be bonded to each other to form a nitrogen-containing heterocycle with L¹, L², and N.

In the related art, an image recording method by, for example, an ink jet method using an ink set containing an ink composition and a treatment liquid for aggregating components in the ink composition has been known.

As the ink composition constituting the ink set, from the viewpoint of enhancing the accuracy of an image, an ink composition containing fine particles of a resin may be used, for example, as in JP6432895B. The aggregated state of the ink composition containing the fine particles of the resin in the image is not uniform in a case where the treatment agent acts during recording, depending on a content of the fine particles or the like, so that unexpected shades of color may partially appear in the recorded image. The shades of color in the image may be one cause of giving a rough impression to the image visually (so-called graininess) or deteriorating the uniformity of image density. That is, during recording of the image, a plurality of ink droplets that are adjacent to each other and applied onto a recording medium may interfere with each other. In a cluster of the plurality of ink droplets, adjacent ink droplets may interfere with each other, and some ink droplets may be affected by other ink droplets, thereby the ink droplets moving from a landing position. Such a phenomenon causes various density unevenness in the image.

In view of the above description, the ink composition of the present disclosure further contains the water-soluble polymer B that precipitates in a case of recording an image (for example, in a case where the treatment liquid acts) and that exhibits a thickening action, in addition to the pigment and the pigment dispersion polymer A that disperses the pigment. A specific acid group (that is, at least one acid group selected from the group consisting of a phosphoric acid group, a sulfonic acid group, and a carboxylic acid group) contained in the water-soluble polymer B and the constitutional unit represented by General Formula (1), which has an amide structure (see the structure of General Formula (1)) are considered to contribute such a thickening action.

Due to the thickening action of the water-soluble polymer B, the viscosity of the ink composition increases in a case where the water-soluble polymer B is applied to the recording medium.

That is, in the present disclosure, a thickening action of the ink composition associated with the precipitation of the water-soluble polymer B is caused, and an aggregating action of the pigment is caused. As a result, the movement of ink droplets (ink dots) is suppressed by the thickening action due to the precipitation of the water-soluble polymer B, so that the image is accurately formed by the aggregating action of the pigment, and a partial change in shades of color also decreases. Therefore, in the image, unevenness (bleeding) of the density, which appears due to existence of a part where the ink droplets interfere with each other (for example, the movement and coalescence of liquid droplets) and a part where the ink droplets do not interfere with each other, is suppressed to a low level.

Furthermore, the present inventors have studied and found that the specific acid group and the constitutional unit represented by General Formula (1), which are contained in the water-soluble polymer B, also contribute to the suppression of image blocking. It is considered that the reason why the image blocking can be suppressed is that the intensity of an image is enhanced by a hydrogen bonding property of the specific acid group and the constitutional unit represented by General Formula (1).

As described above, according to the ink composition of the present disclosure, it is possible to record an image in which bleeding and blocking are suppressed.

Although the effect of the ink composition of the present disclosure (that is, the effect of suppressing bleeding and blocking of an image) is an effect also exhibited in a case where an image is recorded by using the ink composition without a treatment liquid containing an aggregation component, the effect is an effect particularly effective in a case where an image is recorded by using the ink composition and the treatment liquid.

### -Pigment-

The ink composition of the present disclosure contains at least one pigment.

The pigment is contained as a component for coloration of the ink composition, and can be appropriately selected from known pigments according to a desired hue. Pigments include an organic pigment and an inorganic pigment.

Examples of the organic pigment include an azo pigment, a polycyclic pigment, a chelate dye, a nitro pigment, a nitroso pigment, and aniline black. Among these, an azo pigment or a polycyclic pigment is preferable.

Examples of the azo pigment include an azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate, and an acid dye-type chelate.

Examples of the inorganic pigment include titanium oxide, iron oxide, calcium carbonate, barium sulfate, aluminum hydroxide, Barium Yellow, Cadmium Red, Chrome Yellow, and carbon black.

Specific examples of the pigment include pigments described in paragraphs 0142 to 0145 of JP2007-100071A.

A volume average particle diameter of the pigment is preferably 10 nm to 200 nm, more preferably 10 nm to 150 nm, and still more preferably 10 nm to 100 nm. In a case where the volume average particle diameter is 200 nm or less, satisfactory color reproducibility is obtained, and in a case where an image is recorded by an ink jet method, satisfactory jetting properties are obtained. In a case where the volume average particle diameter is 10 nm or more, satisfactory light resistance is obtained.

There are no particular limitations on the particle size distribution of the pigment in the ink composition, and the particle size distribution may be any one of a wide particle size distribution and a monodisperse particle size distribution. In addition, two or more pigments each having a monodisperse particle size distribution may be used as a mixture.

The volume average particle diameter and the particle size distribution of the pigment in the ink composition are values measured by a particle size distribution measuring device using light scattering (for example, Microtrac UPA (registered trademark) EX150 manufactured by Nikkiso Co., Ltd.).

A content of the pigment in the ink composition is not particularly limited and may be appropriately selected according to the purpose, application, and the like. The content of the pigment in the ink composition is preferably 1% by mass to 20% by mass, and more preferably 1% by mass to 10% by mass with respect to a total solid content of the ink composition, from the viewpoint of colorability and storage stability.

### -Pigment Dispersion Polymer A-

The ink composition of the present disclosure contains at least one pigment dispersion polymer A.

The pigment dispersion polymer A is a polymer that adheres to a part or the entire surface of the pigment and functions as a dispersing agent to disperse the pigment. That is, a preferable aspect of the ink composition is an aspect in which at least a part of the total amount of the pigment dispersion polymer A adheres to a part or the entire surface of the pigment.

The pigment dispersion polymer A preferably contains at least one acid group selected from the group consisting of a phosphoric acid group, a sulfonic acid group (a sulfo group), and a carboxylic acid group (a carboxy group). Therefore, the dispersibility of a hydrophobic pigment in water can be enhanced.

The pigment dispersion polymer A preferably contains a carboxylic acid group as an acid group.

The acid group may be introduced into the polymer by polymerization of a monomer containing the acid group. The pigment dispersion polymer A preferably contains a constitutional unit derived from a monomer containing an acid group.

Specific examples of the constitutional unit derived from a monomer containing an acid group are as follows. The present disclosure is not limited thereto.

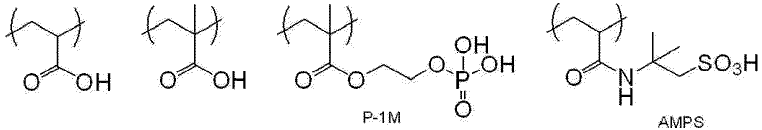

In a case where the pigment dispersion polymer A is a copolymer containing the constitutional unit derived from a monomer containing an acid group, a content ratio of the constitutional unit derived from a monomer containing an acid group in the pigment dispersion polymer A is preferably 5% by mass to 40% by mass and more preferably 8% by mass to 20% by mass with respect to all constitutional units of the pigment dispersion polymer A, from the viewpoint of the pigment dispersibility.

The pigment dispersion polymer A preferably contains an aromatic ring.

The aromatic ring may be introduced into the pigment dispersion polymer A by polymerization of a monomer containing an aromatic ring as a constitutional unit derived from a monomer containing an aromatic ring.

In a case where the pigment dispersion polymer A contains an aromatic ring, the pigment dispersion polymer A tends to be more hydrophobic. As a result, the pigment dispersion polymer A easily adheres to the pigment, and the stability of the pigment in water is further enhanced.

The aromatic ring is a cyclic unsaturated ring with aromaticity.

Examples of the aromatic ring include aromatic hydrocarbon rings such as a benzene ring, a naphthalene ring, an anthracene ring, and a pyrene ring; and heteroaromatic rings such as a pyridine ring, a pyrrole ring, a furan ring, a thiophene ring, an imidazolyl ring, and an acridone ring; and the like. Among these, an aromatic hydrocarbon ring is preferable.

As the monomer containing an aromatic ring, a monomer containing an aromatic ring and an ethylenically unsaturated double bond is preferable, and a vinyl monomer containing an aromatic ring is more preferable. Examples of the monomer containing an aromatic ring include styrene, methylstyrene, divinylbenzene, vinylpyridine, diallyl phthalate, and the like, and (meth)acrylate containing an aromatic ring (for example, benzyl acrylate, phenoxyethyl acrylate, and the like).

The monomer containing an aromatic ring may be unsubstituted or may be a substituted monomer substituted with a substituent. Examples of the substituent include a halogen atom, an alkyl group, a carboxylic acid group, a hydroxyl group, and the like.

Examples of the halogen atom include chlorine, bromine, iodine, and the like.

As the alkyl group, an alkyl group having 1 to 12 carbon atoms (preferably 1 to 8 carbon atoms) is preferable, and examples thereof include a methyl group, an ethyl group, a propyl group, a butyl group, hexyl group, and the like. The alkyl group may be unsubstituted or may have a substituent similar to the above.

Specific examples of the constitutional unit derived from a monomer containing an aromatic ring are as follows. The present disclosure is not limited to the following specific examples. "^{∗}" in each structure indicates a bonding site. "iBu" represents isobutyl, "nBu" represents normal butyl, and "tBu" represents tertiary butyl.

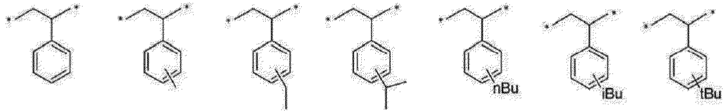

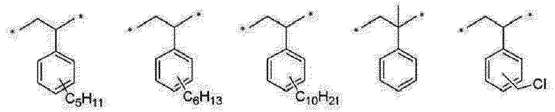

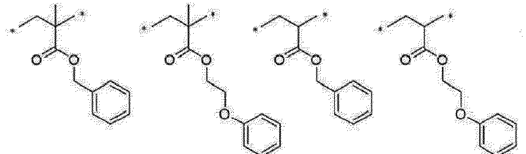

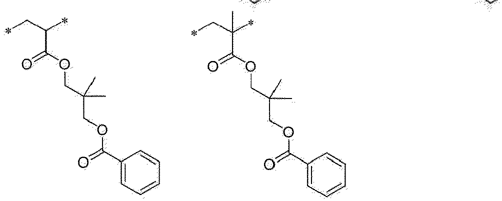

A content of the constitutional unit derived from a monomer containing an aromatic ring in the pigment dispersion polymer A is preferably 50% by mass to 85% by mass, more preferably 60% by mass to 80% by mass with respect to all constitutional units in one molecule of the pigment dispersion polymer A.

The pigment dispersion polymer A can contain a constitutional unit derived from a monomer containing no aromatic ring, in addition to the constitutional unit derived from a monomer containing an aromatic ring.

Suitable examples of the constitutional unit derived from a monomer having no aromatic ring can include alkyl (meth)acrylate and the like.

As the alkyl (meth)acrylate, alkyl (meth)acrylate with an alkyl moiety having 1 to 20 carbon atoms is preferable. Examples of the alkyl (meth)acrylate include methyl (meth)acrylate, ethyl (meth)acrylate, butyl (meth)acrylate, stearyl (meth)acrylate, and the like.

Specific examples of the pigment dispersion polymer A include the following copolymers. A mass ratio of monomers in each copolymer can be appropriately selected within a range satisfying a range of a weight-average molecular weight. The present disclosure is not limited to the following specific examples.
- Benzyl methacrylate/acrylic acid copolymer
- Benzyl methacrylate/methacrylic acid copolymer
- Styrene/acrylic acid/stearyl acrylate copolymer
- Styrene/acrylic acid/stearyl methacrylate copolymer
- Benzyl methacrylate/methacrylic acid/stearyl methacrylate copolymer
- Phenoxyethyl methacrylate/methacrylic acid/stearyl methacrylate copolymer
- Phenoxyethyl methacrylate/methacrylic acid/stearyl methacrylate/hydroxyethyl methacrylate copolymer

An acid value of the pigment dispersion polymer A is preferably 50 mgKOH/g to 180 mgKOH/g, more preferably 50 mgKOH/g to 150 mgKOH/g, and still more preferably 50 mgKOH/g to 120 mgKOH/g, from the viewpoint of the dispersibility and dispersion stability of the pigment.

The acid value can be measured by titration of an indicator, and is a value measured by a method described in Japanese Industrial Standards (JIS) K0070: 1992.

A weight-average molecular weight (Mw) of the pigment dispersion polymer A is preferably 1,000 to 100,000 and more preferably 10,000 to 50,000.

A content of the pigment dispersion polymer A in the ink composition is preferably 10% by mass to 80% by mass and more preferably 25% by mass to 70% by mass with respect to the amount of the pigment, from the viewpoint of obtaining satisfactory dispersibility of the pigment.

### -Water-soluble Polymer B-

The ink composition of the present disclosure contains at least one water-soluble polymer B.

The water-soluble polymer B is a polymer different from the pigment dispersion polymer A and is water-soluble.

In the present disclosure, the "water-soluble" in the water-soluble polymer B means a property that the amount dissolved in 100 g of water at 25°C is 1 g or more.

In the present disclosure, the concept that "the amount dissolved in 100 g of water at 25°C is 1 g or more" includes the fact that the total amount of an object is dissolved in a case where 100 g of water at 25°C is added to 1 g of the object (that is, the polymer) and stirred at 25°C, and the fact that a state in which the total amount of the object is dissolved at 25°C is maintained for 1 hour or more in a case where the total amount of 1 g of the object is dissolved in 100 g of water under heating by higher than 25°C, and the temperature of the obtained solution is lowered to 25°C.

Herein, "the total amount of 1 g of the object is dissolved in 100 g of water under heating by higher than 25°C" means that the total amount of 1 g of the object is dissolved in 100 g of water by performing at least one of an operation of adding 100 g of water at higher than 25°C to 1 g of the object and an operation of heating a sample that is obtained by adding 100 g of water to 1 g of the object to higher than 25°C.

The water-soluble polymer B may be a water-soluble polymer obtained by neutralizing a carboxylic acid group in a water-insoluble polymer containing the carboxylic acid group (that is, a polymer having a dissolution amount of less than 1 g in 100 g of water at 25°C).

The water-soluble polymer B is preferably dissolved in 100 g of water at 25°C in an amount of 3 g or more (more preferably 10 g or more). The meaning of "dissolved in 100 g of water at 25°C in an amount" is as described above.

The water-soluble polymer B is preferably a polymer having higher water-solublility than the pigment dispersion polymer A. It is preferable that the water-soluble polymer B is present in the ink composition in a dissolved state rather than being present on the surface of the pigment to modify the pigment.

The water-soluble polymer B contains at least one acid group selected from the group consisting of a phosphoric acid group, a sulfonic acid group (that is, a sulfo group), and a carboxylic acid group (that is, a carboxy group), and a constitutional unit represented by General Formula (1).

The water-soluble polymer B contains the acid group to suppress bleeding of the recorded image.

Since the water-soluble polymer B contains the acid group and the constitutional unit represented by General Formula (1), the film strength of the recorded image is improved, and as a result, the image blocking is suppressed.

The acid group in the water-soluble polymer B may be an acid group neutralized with a base (for example, -COONa) or an unneutralized acid group (for example, -COOH).

The water-soluble polymer B in the ink composition may contain both an acid group neutralized with a base and an unneutralized acid group.

In a case where the water-soluble polymer B in the ink composition contains an acid group neutralized with a base, the water solubility of the water-soluble polymer B is further enhanced, which is preferable.

The base is not limited as long as it can neutralize the acid group. Examples of the base include inorganic bases such as alkali metal hydroxides, alkaline earth metal hydroxides, and organic bases such as organic amines.

Examples of the alkali metal include potassium (K) and sodium (Na).

Examples of the alkaline earth metal include calcium (Ca) and magnesium (Mg).

Examples of the alkali metal hydroxides include potassium hydroxide, sodium hydroxide, and the like.

Examples of the alkaline earth metal hydroxides include calcium hydroxide and magnesium hydroxide.

Examples of the organic amines include ammonia, a primary amine (for example, ethylamine, monoethanolamine, and the like), a secondary amine (for example, diethylamine, ethylenediamine, and the like), and a tertiary amine (for example, triethylamine, triethanolamine, isopropylethylamine, pyrrolidine, piperidine, and the like), and a quaternary ammonium salt. Among these, as the organic amine, an organic amine having a boiling point of 80°C or higher is preferable from the viewpoint of storage stability.

From the viewpoint of the storage stability, the base is preferably an alkali metal hydroxide or an organic amine, and more preferably an alkali metal hydroxide or an organic amine having a boiling point of 80°C or higher.

Examples of the organic amine having a boiling point of 80°C or higher include ethylenediamine (117°C), triethylamine (90°C), monoethanolamine (170°C), triethanolamine (208°C), isopropylethylamine (127°C), and pyrrolidine (87°C), piperidine (106°C), and the like.

A content of the acid group in the water-soluble polymer B is preferably 5% by mass to 40% by mass and more preferably 7% by mass to 25% by mass, from the viewpoint of exhibiting the satisfactory thickening action of the ink composition during the recording.

The water-soluble polymer B preferably contains a carboxylic acid group as an acid group from the viewpoint of exhibiting the satisfactory thickening action of the ink composition during the recording.

Furthermore, from the viewpoint of further suppressing pigment fixation inside a jetting head (hereinafter, referred to as an "ink jet head") and further improving the maintainability, the water-soluble polymer B contains a carboxylic acid group as an acid group, and 40% by mol or more of the carboxylic acid group is preferably neutralized with a base.

In this case, a ratio of the neutralized carboxylic acid group to the total carboxylic acid group (hereinafter, also referred to as a "neutralization degree of a carboxylic acid group") is preferably 50% by mol or more, more preferably 60% by mol or more, and still more preferably 80% by mol or more. The upper limit of the neutralization degree of the carboxylic acid group (that is, the ratio of the neutralized carboxylic acid group) can be 100% by mol.

The acid group may be introduced into the water-soluble polymer B by polymerization of a monomer containing an acid group. The water-soluble polymer B preferably contains a constitutional unit derived from a monomer containing an acid group.

Specific examples of the constitutional unit derived from a monomer containing an acid group are as follows. The present disclosure is not limited thereto.

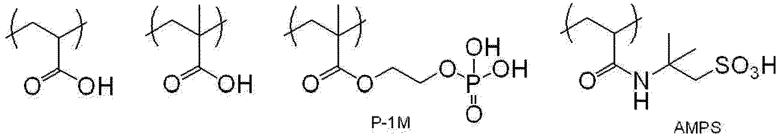

In a case where the water-soluble polymer B is a copolymer containing the constitutional unit derived from a monomer containing an acid group, a content ratio of the constitutional unit derived from a monomer containing an acid group in the water-soluble polymer B is preferably 5% by mass to 40% by mass and more preferably 8% by mass to 20% by mass with respect to all constitutional units of the water-soluble polymer B, from the viewpoint of exhibiting the satisfactory thickening action of the ink composition during the recording.

Next, the constitutional unit represented by General Formula (1) will be described in detail.

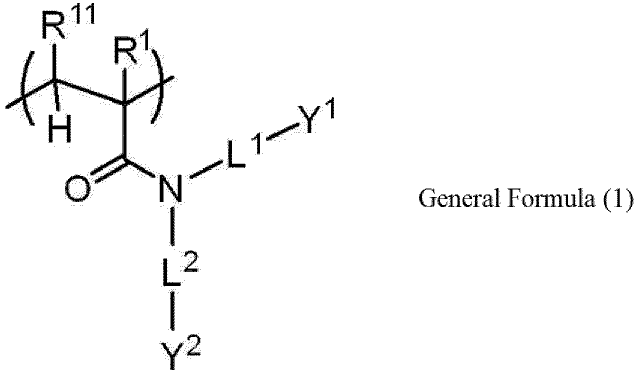

In Formula (1), R¹ represents a hydrogen atom or a methyl group.

In Formula (1), R¹¹ represents a hydrogen atom, a carboxylic acid group, or a carbamoyl group.

The carbamoyl group may be substituted with an alkyl group (for example, an alkyl group having 1 to 4 carbon atoms).

R¹¹ is preferably a hydrogen atom.

In General Formula (1), L¹ and L² each independently represent a divalent linking group that is one kind selected from the group A consisting of an alkylene group, an alkenylene group, an alkynylene group, -O-, and -C(=O)-, a divalent linking group that is obtained by combining two or more kinds selected from the group A, or a single bond.

The alkylene group in the group A may be unsubstituted or may have a substituent, and is preferably an alkylene group having 1 to 8 carbon atoms and more preferably an alkylene group having 1 to 4 carbon atoms. Examples of the alkylene group include a methylene group, an ethylene group, an i-propylene group, an n-butylene group, a t-butylene group, and the like.

The alkenylene group in the group A may be unsubstituted or may have a substituent, and is preferably an alkenylene group having 2 to 8 carbon atoms and more preferably an alkenylene group having 2 to 4 carbon atoms. Examples of the alkenylene group include vinylene, 1-methylvinylene, propenylene, 2-butenylene, a 2-pentenylene group, and the like.

The alkynylene group in the group A may be unsubstituted or may have a substituent, and is preferably an alkynylene group having 2 to 8 carbon atoms and more preferably an alkynylene group having 2 to 4 carbon atoms. Examples of the alkynylene group include ethynylene, propynylen, butynylene, 1,3-butadiynylene, 2-pentynylene, 2,4-pentadiynylene, 2-hexynylene, 3-heptynylene, 4-octynylen, and the like.

Examples of substituents in the group A include a halogen atom, an alkyl group, a carboxylic acid group, a hydroxyl group, an amino group, and the like (hereinafter, referred to as a "substituent group X").

Examples of the halogen atom include chlorine, bromine, iodine, and the like.

As the alkyl group, an alkyl group having 1 to 12 carbon atoms (preferably 1 to 8 carbon atoms) is preferable, and examples thereof include a methyl group, an ethyl group, a propyl group, a butyl group, hexyl group, and the like. The alkyl group may be unsubstituted or may have a substituent similar to the above.

In General Formula (1), unless otherwise specified, the substituents in the above described substituent group X can be referred to as a substituent.

In L¹ and L², examples of a divalent linking group that is obtained by combining two or more kinds selected from the group A include an alkyleneoxy group, an alkyl ester group, and the like.

Examples of the alkyleneoxy group include -(C₂H₄O)ₙ- (n is an integer of 2 to 10), -(C₃H₆O)ₙ- (n is an integer of 2 to 10), and the like.

Examples of the alkyl ester group include caprolactone-modified acrylate and the like.

Among these, L¹ and L² each independently preferably a single bond, an alkylene group or an alkyleneoxy group, more preferably a single bond, an alkylene group having 1 to 4 carbon atoms or an alkyleneoxy group having 2 and 3 carbon atoms, and still more preferably a single bond, an alkylene group having 1 to 4 carbon atoms or an ethyleneoxy group [-(C₂H₄O)n- (n is an integer of 2 to 10)].

Examples of the alkylene group having 1 to 4 carbon atoms include a methylene group, an ethylene group, an i-propylene group, an n-butylene group, and the like.

In General Formula (1), Y¹ and Y² each independently represent a hydrogen atom, -OH, -R², -OR², -NH₂, -NHR², -NR²R³, or -SH.

R² and R³ each independently represent an alkyl group, an alkenyl group, an alkynyl group, or an aryl group.

An alkyl group in R² and R³ may be unsubstituted or may have a substituent, and is preferably an alkyl group having 1 to 8 carbon atoms and more preferably an alkyl group having 1 to 4 carbon atoms. Examples of the alkyl group include a methyl group, an ethyl group, a propyl group, an n-butyl group, a t-butyl group, and the like.

An alkenyl group in R² and R³ may be unsubstituted or may have a substituent, and is preferably an alkenyl group having 2 to 8 carbon atoms and more preferably an alkenyl group having 2 to 4 carbon atoms. Examples of the alkenyl group include vinyl, 1-methylvinyl, propenyl, 2-butenyl, a 2-pentenyl group, and the like.

An alkynyl group in R² and R³ may be unsubstituted or may have a substituent, and is preferably an alkynyl group having 2 to 8 carbon atoms and more preferably an alkynyl group having 2 to 4 carbon atoms. Examples of the alkynyl group include ethynyl, propynyl, butynyl, 1,3-butadynyl, 2-pentynyl, 2,4-pentadiynyl, 2-hexynyl, 3-heptynyl, 4-octynyl, and the like.

The aryl group in R² and R³ may be unsubstituted or may have a substituent. As the aryl group in R² and R³, a substituted or unsubstituted phenyl group is preferable.

In General Formula (1), Y¹ and Y² may be bonded to each other to form a nitrogen-containing heterocycle with L¹, L², and N.

The formed nitrogen-containing heterocycle may contain a heteroatom other than nitrogen (for example, an oxygen atom, a sulfur atom, and the like).

As the nitrogen-containing heterocycle, a nitrogen-containing 5-membered ring or a nitrogen-containing 6-membered ring is preferable.

Examples of the nitrogen-containing heterocycle include a morpholine ring, a piperidine ring, a piperazine ring, a pyrazolidine ring, a pyrrolidine ring, an imidazolidine ring, and the like.

Specific examples of the constitutional unit represented by General Formula (1) are shown below, but the constitutional unit represented by General Formula (1) is not limited to the following specific examples.

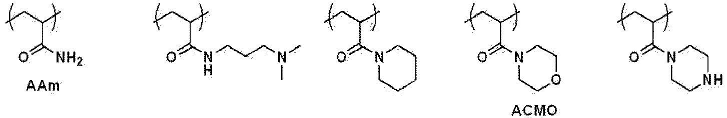

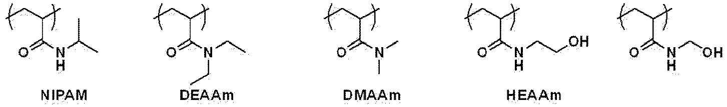

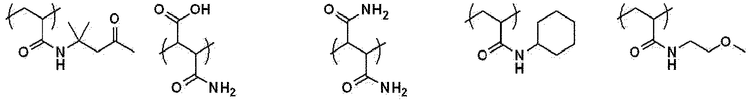

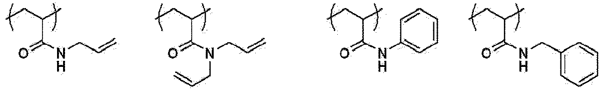

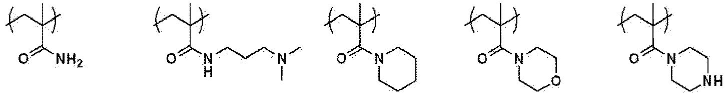

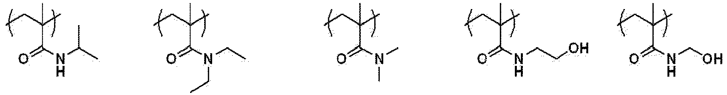

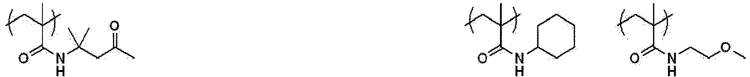

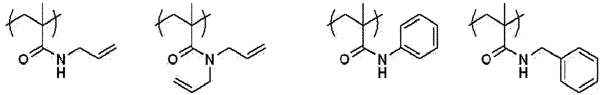

A content ratio of the constitutional unit represented by General Formula (1) in the water-soluble polymer B is preferably 3% by mass to 45% by mass with respect to the total constitutional unit of the water-soluble polymer B. In a case where the content ratio of the constitutional unit represented by General Formula (1) is 3% by mass or more, image blocking is suppressed. In addition, in a case where the content ratio of the constitutional unit represented by General Formula (1) is 45% by mass or less, for example, in a case where the ink composition is jetted from the jetting head by an ink jet method to record an image, an affinity of the inside of the jetting head with the ink composition is suppressed, and the adhesion of the ink composition to the inside of the jetting head is suppressed. As a result, the maintainability of the jetting head is improved.

The content ratio of the constitutional unit represented by General Formula (1) is more preferably 3% by mass to 25% by mass and still more preferably 3% by mass to 20% by mass.

In the water-soluble polymer B, the total amount of the acid group and the constitutional unit represented by General Formula (1) is preferably 5% by mass to 80% by mass and more preferably 5% by mass to 45% by mass with respect to the solid content mass of the water-soluble polymer B. In a case where the total amount of the acid group and the constitutional unit represented by General Formula (1) is 5% by mass or more, satisfactory water solubility can be obtained, and the thickening action of the ink composition is likely to be exhibited. In a case where the total amount of the acid group and the constitutional unit represented by General Formula (1) is 45% by mass or less, the viscosity of the ink composition itself can be kept low, and for example, satisfactory jettability of the ink composition in a case where an image is recorded by an ink jet method is obtained. In addition, the maintainability of the jetting head is improved.

The total amount of the acid group and the constitutional unit represented by General Formula (1) is still more preferably 5% by mass to 40% by mass and particularly preferably 10% by mass to 35% by mass.

The water-soluble polymer B preferably further contains at least one constitutional unit selected from the group consisting of a constitutional unit represented by General Formula (A) and a constitutional unit represented by General Formula (B).

The constitutional unit represented by General Formula (A) or General Formula (B) is a hydrophobic monomer unit. Since the constitutional unit represented by General Formula (A) or General Formula (B) is contained, the affinity between the inside of the jetting head and the ink composition is lowered in a case where the jetting head that jets the ink composition is used, and the ink composition is less likely to adhere to the inside of the jetting head. As a result, the maintainability of the jetting head is further improved.

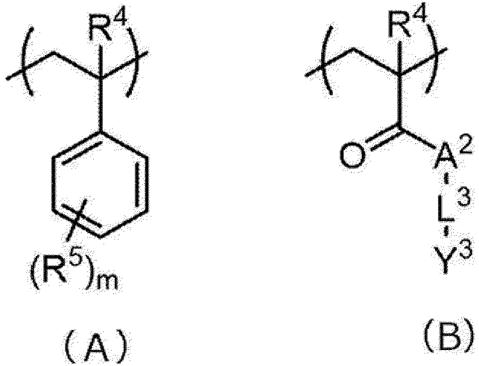

In General Formula (A) and General Formula (B), R⁴'s each independently represent a hydrogen atom or a methyl group, and a methyl group is preferable.

In General Formula (A), R⁵'s each independently represent an alkyl group, an alkenyl group, or an alkynyl group.

The alkyl group, the alkenyl group, or the alkynyl group in R⁵ is synonymous with the alkyl group, the alkenyl group, or the alkynyl group in R² and R³ in General Formula (1), and the preferable aspects are also the same.

In addition, R⁵ is present in a range of m, and m is an integer of 0 to 5. In terms of synthesis suitability, m is preferably 0 or 1. In a case where m is an integer of 2 or more, a plurality of R⁵'s may be the same groups as each other or different groups from each other.

A² in General Formula (B) represents a single bond or -O-.

A² is more preferably -O-.

In General Formula (B), L³ represents a divalent linking group that is one kind selected from the group B consisting of an alkylene group, an alkenylene group, an alkynylene group, -O-, and -C(=O)-, a divalent linking group that is obtained by combining two or more kinds selected from the group B, or a single bond.

L³ in General Formula (B) is synonymous with L¹ in General Formula (1), and the preferable aspects are the same.

Y³ in General Formula (B) represents an alkyl group having 4 to 22 carbon atoms, an alkenyl group having 4 to 22 carbon atoms, an alkynyl group having 4 to 22 carbon atoms, a cycloalkyl group having 4 to 22 carbon atoms, or an aryl group having 6 to 22 carbon atoms. Y³ is a group having a large number of carbon atoms and having a hydrophobic property.

An alkyl group having 4 to 22 carbon atoms may be unsubstituted or may have a substituent, and is preferably an alkyl group having 4 to 18 carbon atoms, more preferably an alkyl group having 4 to 16 carbon atoms, and still more preferably an alkyl group having 4 to 10 carbon atoms. Examples of the alkyl group include a normal butyl group, an isobutyl group, a 2-ethylhexyl group, an isooctyl group, a stearyl group, and the like.

An alkenyl group having 4 to 22 carbon atoms may be unsubstituted or may have a substituent, and is preferably an alkenyl group having 4 to 18 carbon atoms, more preferably an alkenyl group having 4 to 16 carbon atoms, and still more preferably an alkenyl group having 4 to 10 carbon atoms. Examples of the alkenyl group include a 2-methyl-propenyl group, a 2-butenyl group, a 3-methyl-2-butenyl group, and the like.

An alkynyl group having 4 to 22 carbon atoms may be unsubstituted or may have a substituent, and is preferably an alkynyl group having 4 to 18 carbon atoms, more preferably an alkynyl group having 4 to 16 carbon atoms, and still more preferably an alkynyl group having 4 to 10 carbon atoms. Examples of the alkynyl group include a 4-methyl-1-pentynyl group, a 3-3-dimethylbutynyl group, and the like.

A cycloalkyl group having 4 to 22 carbon atoms may be unsubstituted or may have a substituent, and is preferably a cycloalkyl group having 4 to 20 carbon atoms, more preferably a cycloalkyl group having 4 to 16 carbon atoms, and still more preferably a cycloalkyl group having 6 to 10 carbon atoms. Examples of the cycloalkyl group include a cyclohexyl group, a methylcyclohexyl group, a dimethylcyclohexyl group, an isobornyl group, a dicyclopentanyl group, an adamantane group, a 2-methyladamantan-2-yl group, a 2-ethyladamantan-2-yl group, a 2-isopropyladamantan-2-yl group, a norbornyl group, a methylnorbornyl group, and the like.

An aryl group having 6 to 22 carbon atoms may be unsubstituted or may have a substituent, and is preferably an aryl group having 6 to 20 carbon atoms, more preferably an aryl group having 6 to 16 carbon atoms, and still more preferably an aryl group having 6 to 10 carbon atoms. Examples of the aryl group include a phenyl group, a tolyl group, a xylyl group, an ethylphenyl group, a tert-butylphenyl group, an adamantylphenyl group, a biphenyl group, a naphthyl group, a 2,6-diethylphenyl group, and the like.

From the viewpoint of improving the maintainability of the jetting head and further suppressing image blocking, the water-soluble polymer B preferably contains at least one constitutional unit selected from the group consisting of a constitutional unit represented by General Formula (a) and a constitutional unit represented by any one of General Formulae (b-1), (b-2), (b-3), or (b-4) of the constitutional unit represented by General Formula (A) or General Formula (B).

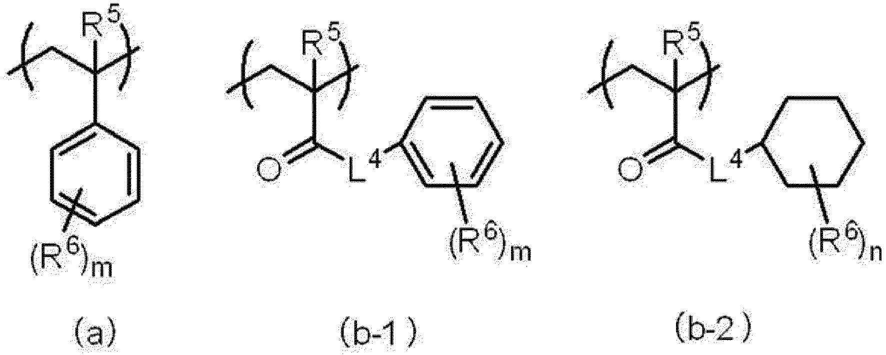

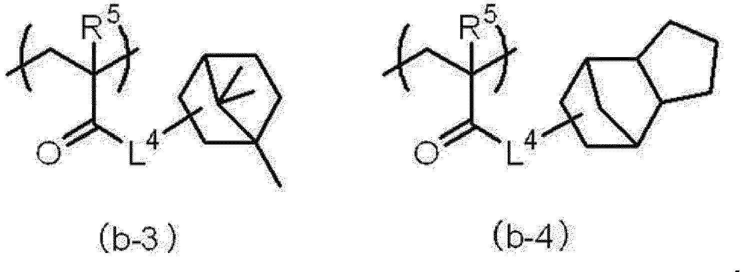

In General Formula (a) and General Formulae (b-1) to (b-4), R⁵'s each independently represent a hydrogen atom or a methyl group. R⁵ in General Formula (a) is preferably a hydrogen atom, and each R⁵ in General Formulae (b-1) to (b-4) is preferably a methyl group.

In General Formula (a) and General Formulae (b-1) and (b-2), R⁶'s each represent an alkyl group, m represents an integer of 0 to 5, and n represents an integer of 0 to 11. Each R⁶ is independently preferably a chain or branched alkyl group having 1 to 10 carbon atoms. Each R⁶ is independently preferably an alkyl group having 1 to 6 carbon atoms and more preferably an alkyl group having 1 to 4 carbon atoms. m is preferably an integer of 0 to 2 and more preferably 0 or 1. n is preferably an integer of 0 to 3 and more preferably 0 or 1.

In General Formulae (b-1) to (b-4), L⁴'s each independently represent a divalent linking group that is one kind selected from the group C consisting of an alkylene group having 1 to 18 carbon atoms, -O-, and -C(=O)-, a divalent linking group that is obtained by combining two or more kinds selected from the group C, or a single bond.

Each L⁴ is independently preferably -O-, ^{∗}-O-alkylene group- (^{∗} represents a bonding site where a carbonyl group is bonded), or -O-alkylene group-O-.

Furthermore, the number of carbon atoms of the alkylene group in each L⁴ is preferably 1 to 12, more preferably 1 to 8, still more preferably 1 to 4, particularly preferably 1 or 2, and most preferably 1.

Specific examples of the constitutional unit represented by General Formula (a) and any one of General Formulae (b-1), (b-2), (b-3), or (b-4) are as follows.

"^{∗}" in each structure represents a bonding site. "nBu" represents "normal butyl", "iBu" represents "isobutyl", and "tBu" represents "tertiary butyl".

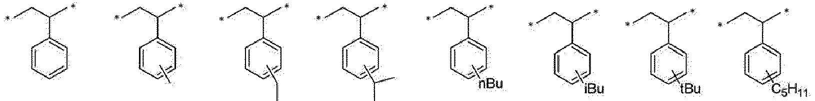

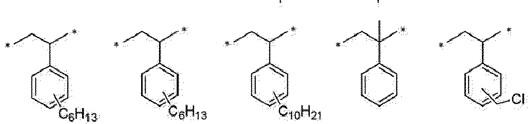

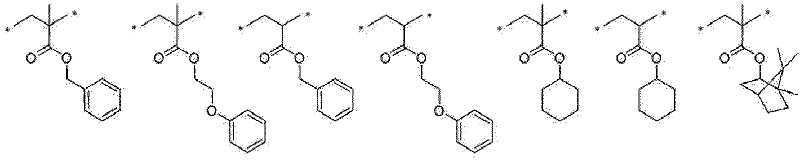

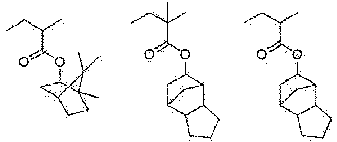

The total content ratio of the constitutional unit represented by General Formula (a) and the constitutional unit represented by any one of General Formulae (b-1), (b-2), (b-3), or (b-4) in the water-soluble polymer B is preferably 3% by mass to 80% by mass, more preferably 3% by mass to 50% by mass, and still more preferably 5% by mass to 50% by mass with respect to the total constitutional unit of the water-soluble polymer B.

Since the total content ratio of the constitutional unit represented by General Formula (A) and the constitutional unit represented by any one of General Formulae (b-1), (b-2), (b-3), or (b-4) is 3% by mass or more, the affinity between the inside of the jetting head and the ink composition is lowered in a case where the jetting head that jets the ink composition is used, and the ink composition is less likely to adhere to the inside of the jetting head. As a result, the maintainability of the jetting head is improved.

The total content ratio of the constitutional unit represented by General Formula (a) and the constitutional unit represented by any one of General Formulae (b-1), (b-2), (b-3), or (b-4) is still more preferably 10% by mass to 40% by mass.

The water-soluble polymer B may contain a constitutional unit derived from an alkyl (meth)acrylate having 1 to 3 carbon atoms in an alkyl moiety.

Examples of the alkyl (meth)acrylate having 1 to 3 carbon atoms in an alkyl moiety include methyl (meth)acrylate, ethyl (meth)acrylate, and propyl (meth)acrylate.

A content ratio of the constitutional unit derived from the alkyl (meth)acrylate having 1 to 3 carbon atoms in an alkyl moiety is preferably 3% by mass to 80% by mass, more preferably 5% by mass to 75% by mass, and still more preferably 15% by mass to 75% by mass with respect to the total constitutional unit of the water-soluble polymer B.

A weight-average molecular weight of the water-soluble polymer B is preferably 5,000 to 100,000. In a case where the weight-average molecular weight of the water-soluble polymer B is in the above described range, bleeding and blocking of an image are further suppressed. In addition, the satisfactory jettability can be obtained even in a case where the ink composition is jetted from the jetting head by an ink jet method.

The weight-average molecular weight of the water-soluble polymer B is more preferably 10,000 to 80,000 in terms of the jettability of the ink composition, and still more preferably 10,000 to 30,000.

The acid value of the water-soluble polymer B is preferably 28 mgKOH/g to 230 mgKOH/g. In a case where the acid value is 230 mgKOH/g or less, the thickening effect of the ink composition can be easily obtained even in a case where a small amount of the water-soluble polymer is used, and the bleeding in an image is suppressed. The acid value is more preferably 50 mgKOH/g or more and furthermore may be 100 mgKOH/g or more, and may be 150 mgKOH/g or more, from the viewpoint of the thickening effect of the ink composition.

The acid value can be measured by titration of an indicator in the same manner as that of the pigment dispersion polymer A, and is a value measured by a method described in Japanese Industrial Standards (JIS) K0070: 1992.

A glass transition temperature (Tg) of the water-soluble polymer B is preferably 80°C or higher. In a case where Tg is 80°C or higher, image blocking is further suppressed.

The Tg of the water-soluble polymer B is more preferably 95°C or higher and still more preferably 110°C or higher. The upper limit of Tg of the water-soluble polymer B is preferably 250°C or lower in terms of synthesis suitability.

A sample obtained by drying a solution of a water-soluble polymer at 150°C under reduced pressure for 6 hours is prepared and measured at a heating rate of 10°C/min by using a differential scanning calorimeter (DSC) to obtain Tg. As the DSC, for example, a differential scanning calorimeter (DSC) DSC7000X manufactured by Hitachi High-Tech Science Corporation can be used.

The content of the water-soluble polymer B in the ink composition is preferably 1% by mass to 10% by mass with respect to a total mass of the ink composition.

In a case where the content of the water-soluble polymer B is 1% by mass or more, the thickening effect of the ink composition can be easily obtained.

In a case where the content of the water-soluble polymer B is 10% by mass or less, the jettability in a case where the ink composition is jetted from the jetting head by an ink jet method is further improved.

### -ClogP of Pigment Dispersion Polymer A and Water-soluble Polymer B-

The pigment dispersion polymer A preferably has hydrophobicity as compared with the water-soluble polymer B, that is, a ClogP is preferably larger than a ClogP of the water-soluble polymer B, from the viewpoint that the pigment dispersion polymer A easily adheres to the pigment to enhance the dispersibility. The ClogP of the pigment dispersion polymer A is preferably 1.75 or more, more preferably 1.80 or more, and still more preferably 1.85 or more.

On the other hand, the water-soluble polymer B preferably has hydrophilicity as compared with the pigment dispersion polymer A, that is, the ClogP is preferably smaller than the ClogP of the water-soluble polymer A, from the viewpoint that the water-soluble polymer B is dissolved in the ink composition and contributes to the thickening of the ink composition in a case where the treatment liquid (specifically, an aggregation component such as acids) acts. The ClogP of the water-soluble polymer B is preferably 1.80 or less, more preferably 1.74 or less, still more preferably 1.72 or less, and still more preferably 1.70 µm or less.

A ClogP indicates that the larger the value, the higher the hydrophobicity.

The ClogP is calculated using ChemDraw (registered trademark) Professional (ver. 16.0.1.4) manufactured by PerkinElmer Informatics.

A ClogP of each polymer is calculated as a ClogP of a monomer for forming the polymer. Regarding a ClogP of a polymer that is a copolymer, a weighted average value of a ClogP of a monomer for forming the copolymer is regarded as the ClogP of the copolymer.

For example, a ClogP of polyacrylic acid is calculated as a ClogP of acrylic acid. In addition, a ClogP of the polyacrylic acid-polymethacrylic acid copolymer (copolymerization mass ratio = 50:50) is calculated as a total value obtained by multiplying each of the ClogP of the acrylic acid and the ClogP of the methacrylic acid by a copolymerization mass ratio (in this case, 0.5 for each).

In a case where a constitutional unit containing a neutralized acid group (for example, -COONa) is present in a polymer, a ClogP of an anion obtained by subtracting a counter cation (for example, Na⁺) from a monomer containing a neutralized acid group (for example, -COONa) is adopted as a ClogP of a monomer for forming this constitutional unit.

In a case where a polymer contained in the ink composition is unknown, a structure and a content ratio of the polymer are specified by performing component analysis on the ink composition by a spectroscopic method or a nuclear magnetic resonance (NMR) method to calculate a ClogP of the Polymer.

### -Water-

The ink composition of the present disclosure contains water.

As the water, for example, ion exchange water or the like can be used.

A content of water is not particularly limited, but is preferably in a range of 10% by mass or more, more preferably in a range of 30% by mass or more, and still more preferably in a range of 50% by mass or more with respect to a total mass of the ink composition.

The upper limit of the content of the water depends on a content of another component, but is, for example, 99% by mass, 90% by mass, 80% by mass, and the like.

### -Water-soluble Organic Solvent-

The ink composition of the present disclosure preferably contains a water-soluble organic solvent.

In the present disclosure, "water-soluble" in the water-soluble organic solvent means a property of dissolving 5 g or more in 100 g of water at 20°C.

Examples of the water-soluble organic solvent include alkanediols (polyhydric alcohol) such as glycerin, 1,2,6-hexanetriol, trimethylolpropane, ethylene glycol, and propylene glycol; sugar alcohols; an alkyl alcohol having 1 to 4 carbon atoms such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol diethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, triethylene glycol monoethyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol, dipropylene glycol monomethyl ether, dipropylene glycol monoethyl ether, dipropylene glycol mono-n-propyl ether, dipropylene glycol mono-iso-propyl ether, triethylene glycol monomethyl ether, and tripropylene glycol monomethyl ether; amide compounds such as formamide, N,N-dimethylformamide, N,N-dimethylacetamide, 2-pyrrolidone, and N-methylpyrrolidone; and the like.

The water-soluble organic solvent can be used alone, or two or more may be used in combination.

The water-soluble organic solvent preferably contains a first organic solvent having a boiling point of 110°C to 240°C. Since the first organic solvent is contained, a content of the high boiling point solvent (for example, a second organic solvent having a boiling point of 245°C to 300°C) can be relatively reduced. As a result, the dryness can be improved, and the image blocking can be suppressed.

Examples of the first organic solvent having a boiling point of 110°C to 240°C include ethylene glycol (198°C), propylene glycol (188°C), dipropylene glycol (230°C), ethylene glycol monomethyl ether (124°C), ethylene glycol diethyl ether (162°C), propylene glycol monoethyl ether (120°C), dipropylene glycol dimethyl ether (171°C), diethylene glycol monomethyl ether (194°C), diethylene glycol diethyl ether (188°C), N-methylpyrrolidone (202°C), and the like.

Examples of the second organic solvent having a boiling point of 245°C to 300°C include diethylene glycol (245°C), glycerin (290°C), 2-pyrrolidone (245°C), triethylene glycol monomethyl ether (248°C), and the like.

As the first organic solvent and the second organic solvent, an alcohol-based organic solvent and an ether-based organic solvent are preferable from the viewpoint of head maintainability. Compared to an organic solvent such as an amide compound (2-pyrrolidone, or the like) that easily interacts with a polymer component, the alcohol-based organic solvent and the ether-based organic solvent are less likely to adhere to the inside of the jetting head. Therefore, the satisfactory maintainability of the jetting head is obtained.

Specific examples of the alcohol-based organic solvent include ethylene glycol, propylene glycol, diethylene glycol, dipropylene glycol, glycerin, and the like.

Examples of the ether-based organic solvent include alkyl ether of the above described ethylene glycol, propylene glycol, diethylene glycol, dipropylene glycol, or glycerin, and the like.

Specific examples of the ether-based organic solvent include alkyl ethers such as ethylene glycol monomethyl ether, ethylene glycol diethyl ether, propylene glycol monoethyl ether, dipropylene glycol dimethyl ether, diethylene glycol monomethyl ether, and diethylene glycol diethyl ether.

In the present disclosure, each of the first organic solvent and the second organic solvent is preferably at least one alcohol-based organic solvent selected from the group consisting of ethylene glycol, diethylene glycol, propylene glycol, triethylene glycol, dipropylene glycol, glycerin, and an alkyl ether thereof.

In a case where the water-soluble organic solvent contains the first organic solvent, a mass ratio (S²/S¹) of a content of the second organic solvent (S²) to a content of the first organic solvent (S¹) is preferably in a range of 0 to 0.3. In a case where S²/S¹ is in the above range, the amount of the organic solvent having a high boiling point is suppressed to a low level, so that the stickiness of an image after drying is suppressed.

S²/S¹ is more preferably in a range of 0 to 0.2 for the same reason as described above.

The ink composition of the present disclosure may contain an organic solvent other than the above described water-soluble organic solvent as long as the effect in the present disclosure is not significantly impaired.

The total amount of the first organic solvent and the second organic solvent in the ink composition is preferably 5% by mass to 30% by mass with respect to a total mass of the ink composition.

In a case where the total amount of the first organic solvent and the second organic solvent is in the above range, the amount of the organic solvent is suppressed to a low level, so that the stickiness of an image after drying is suppressed. In a case where the total amount of the first organic solvent and the second organic solvent is 5% by mass or more, the occurrence of clogging of jetting holes due to the solidification of the ink composition generated at an air interface in the jetting head is suppressed, which causes the satisfactory jettability to be obtained.

The total amount of the first organic solvent and the second organic solvent is more preferably in a range of 7.5% by mass to 40% by mass, still more preferably in a range of 10% by mass to 30% by mass for the same reason as described above.

### -Other Component-

In addition to the above described components, the ink composition of the present disclosure may further contain other components, as necessary, as long as the effect in the present disclosure is not significantly impaired.

Examples of other components include anti-drying agents (swelling agents), anti-coloring agents, penetration enhancer, ultraviolet absorbers, preservatives, rust inhibitors, antifoaming agents, viscosity regulators, pH adjusters, chelating agents, and the like.

### -Physical Properties of Ink Composition-

### 1. Surface Tension

A surface tension of the ink composition is not particularly limited and may be, for example, 20 mN/m or more. From the viewpoint of coatability on the recording medium, the surface tension is preferably 25 mN/m to 40 mN/m and more preferably 27 mN/m to 37 mN/m.

The surface tension of the ink composition is a value measured by a plate method using an automatic surface tensiometer, CBVP-Z (manufactured by Kyowa Interface Science Co., Ltd.) under a condition of 25°C. The surface tension of the ink composition can be adjusted by, for example, adding a surfactant.

### 2. pH

The pH (25°C ± 1°C) of the ink composition is preferably 6 to 10 and more preferably 7 to 10.

The pH is a value measured by using a pH meter (for example, WM-50EG manufactured by DKK-TOA CORPORATION) in a state in which a temperature of a treatment liquid is adjusted to 25°C in an environment of 25°C.

### 3. Viscosity

The viscosity of the ink composition is preferably in a range of 1 mPa·s to 30 mPa·s, more preferably in a range of 1 mPa·s to 20 mPa·s, still more preferably in a range of 2 mPa·s to 15 mPa·s, and particularly preferably in a range of 2 mPa·s to 10 mPa·s from the viewpoint of j ettability in a case where the ink composition is jetted by an ink jet method.

The viscosity means a value measured under the condition of 25°C. The viscosity can be measured by using, for example, VISCOMETER TV-22 (manufactured by TOKI SANGYO CO., LTD.).

### <Ink Set>

In the present disclosure, the ink composition of the present disclosure may be used alone to record an image, or an ink set of the present disclosure described below may be used to record an image.

The ink set of the present disclosure includes the above described ink composition of the present disclosure and a treatment liquid.

The treatment liquid contains water and an aggregation component (specifically, at least one selected from the group consisting of a polyvalent metal salt, an acidic compound, and a cationic polymer) that aggregates a component (particularly, a dispersion component such as a pigment) in the ink composition.

Since the ink set of the present disclosure includes the ink composition of the present disclosure, the same effect as that obtained by the ink composition of the present disclosure (suppression of bleeding and blocking) can be obtained by using the ink set of the present disclosure.

In particular, in a case where an image is recorded by using the ink set of the present disclosure, bleeding of an image is further suppressed by an action of the aggregation component.

The ink set of the present disclosure may contain only one kind of the ink composition of the present disclosure, or may contain two or more kinds thereof.

The ink set of the present disclosure may contain only one kind of the treatment liquid of the present disclosure, or may contain two or more kinds thereof.

The ink set of the present disclosure may contain a liquid other than the ink composition and the treatment liquid of the present disclosure (for example, an ink composition other than the ink composition of the present disclosure).

Hereinafter, the treatment liquid in the ink set of the present disclosure (hereinafter, also referred to as the "treatment liquid in the present disclosure") will be described in detail.

### -Aggregation Component-

The treatment liquid in the present disclosure contains an aggregation component having an aggregating action to aggregate a component (particularly, a dispersion component such as the pigment) in the ink composition. The aggregation component in the present disclosure not only contributes to the aggregating action, but also contributes to the thickening action of the water-soluble polymer in the ink composition, and has a function of suppressing the occurrence of bleeding in an image.

The aggregation component is at least one compound selected from the group consisting of a polyvalent metal salt, an acidic compound, and a cationic polymer. The aggregation component is preferably an acidic compound from the viewpoint of the above described aggregating action and thickening action.

### -Acidic Compound-

The acidic compound functions as an immobilizing agent capable of immobilizing the ink composition in a case where the acidic compound comes into contact with the ink composition on the recording medium. For example, in a case where the treatment liquid containing the acidic compound is applied to the recording medium (preferably coated paper), and the ink composition is applied to a treatment liquid-applied surface of the recording medium, at least a pigment dispersed in the ink composition can be aggregated and the water-soluble polymer B can be precipitated to thicken the ink composition.

As the acidic compound, an acid is preferable, and examples thereof include sulfuric acid, hydrochloric acid, nitric acid, phosphoric acid, polyacrylic acid, acetic acid, glycolic acid, malonic acid, malic acid, maleic acid, propane tricarboxylic acid, ascorbic acid, succinic acid, glutaric acid, fumaric acid, citric acid, tartaric acid, lactic acid, sulfonic acid, orthophosphoric acid, metaphosphoric acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid, oxalic acid, and benzoic acid.

From the viewpoint of achieving a balance between the suppression of volatilization and the solubility in a solvent, the acidic compound is preferably an acid having a molecular weight of 35 to 1,000, more preferably an acid having a molecular weight of 50 to 500, and particularly preferably an acid having a molecular weight of 50 to 200.

pKa (in H₂O, 25°C) of the acid is preferably -10 to 7, more preferably 1 to 7, and still more preferably 1 to 5, from the viewpoint of achieving both prevention of bleeding of ink and photocurability.

As pKa, values calculated by Advanced Chemistry Development (ACD/Labs) Software V11. 02 (1994-2014 ACD/Labs) or values described in literature (for example, J. Phys. Chem. A 2011, 115, 6641-6645, and the like) can be used.

Among these, the acidic compound is preferably a highly water-soluble compound. As the acidic compound, a monovalent, divalent, or trivalent acid is preferable, and divalent and trivalent acids are more preferable, from the viewpoint of exhibiting the satisfactory aggregating action on the components in the ink composition and the satisfactory thickening action of the water-soluble polymer B.

In a case where the treatment liquid is an aqueous solution including an acidic compound, the pH (25°C) of the treatment liquid is preferably 0.1 to 6.8, more preferably 0.1 to 6.0, and even more preferably 0.1 to 5.0.

The pH is a value obtained by adjusting the temperature of the treatment liquid to 25°C and measuring the result at 25°C using a pH meter. As the pH meter, for example, WM-50EG manufactured by DKK-TOA CORPORATION can be used.

In a case where the treatment liquid contains an acidic compound as an aggregation component, a content of the acidic compound in the treatment liquid is preferably 50% by mass or less, more preferably 15% by mass to 50% by mass, and still more preferably 25% by mass to 40% by mass, from the viewpoint of the aggregating effect of a dispersion component such as a pigment and the thickening effect of the water-soluble polymer B.

Regarding the treatment liquid, the acidic compound may be used alone, or two or more thereof may be used in combination.

In a case where the treatment liquid contains an acidic compound as an aggregation component, the amount of the treatment liquid applied to the recording medium is not particularly limited as long as the treatment liquid is present in an amount sufficient to aggregate the ink composition. The amount of the treatment liquid applied to the recording medium is preferably 0.5 g/m² to 4.0 g/m² and more preferably 1.0 g/m² to 2.0 g/m² from the viewpoint of the aggregating action and thickening action in the ink composition. In particular, from the viewpoint of an action by the acidic compound, the amount of the treatment liquid to be applied is preferably an amount of the acidic compound of 0.5 g/m² to 4.0 g/m², and more preferably an amount of the acidic compound of 0.9 g/m² to 3.75 g/m².

### -Polyvalent Metal Salt-

The treatment liquid also preferably contains a polyvalent metal salt as the aggregation component. The polyvalent metal salt is suitable for causing the rapid aggregating action.

Examples of the polyvalent metal salt include salts of the Group 2 alkaline earth metals in the Periodic Table (for example, magnesium and calcium), salts of the Group 3 transition metals in the Periodic Table (for example, lanthanum), salts of the Group 13 cations in the Periodic Table (for example, aluminum), and salts of lanthanides (for example, neodymium). As the salts of a metal, carboxylate (formate, acetate, benzoate, or the like), nitrate, chloride, and thiocyanate are suitable. Among them, preferred examples thereof include calcium salt or magnesium salt of a carboxylic acid (formic acid, acetic acid, benzoic acid, or the like), calcium salt or magnesium salt of nitric acid, calcium chloride, magnesium chloride, and calcium salt or magnesium salt of thiocyanic acid.

In a case where the treatment liquid contains a polyvalent metal salt as an aggregation component, a content of the polyvalent metal salt in the treatment liquid is preferably 1% by mass to 10% by mass, more preferably 1.5% by mass to 7% by mass, and still more preferably 2% by mass to 6% by mass, from the viewpoint of the aggregating effect of a dispersion component such as a pigment and the thickening effect of the water-soluble polymer B.

### -Cationic Polymer-

Examples of the cationic polymer include a homopolymer of a cationic monomer having a primary, secondary, or tertiary amino group or a quaternary ammonium salt group as a cationic group, and a copolymer of a cationic monomer containing a primary, secondary, or tertiary amino group or a quaternary ammonium salt group and a non-cationic monomer, or a condensation polymer thereof. The cationic polymer may be used in the form of any one of a water-soluble polymer and water-dispersible latex particles.

Preferred examples of the cationic polymer can include poly(vinylpyridine) salt, polyalkylaminoethyl acrylate, polyalkylaminoethyl methacrylate, poly(vinylimidazole), polyethyleneimine, polybiguanide, polyguanide, polyallylamine and derivatives thereof, and the like.

A weight-average molecular weight of the cationic polymer, is preferably selected in a range of low molecular weight from the viewpoint of the viscosity of the treatment liquid.

In a case where the treatment liquid is applied to the recording medium by an ink jet method, the weight-average molecular weight of the cationic polymer is preferably in a range of 1,000 to 500,000, more preferably in a range of 1,500 to 200,000, and still more preferably in a range of 2,000 to 100,000. A weight-average molecular weight of 1000 or more is advantageous in terms of aggregation rate. A weight-average molecular weight of 500,000 or less is advantageous in terms of jetting reliability.

In a case where the treatment liquid contains the cationic polymer as an aggregation component, a content of the cationic polymer in the treatment liquid is preferably 1% by mass to 50% by mass, more preferably 2% by mass to 30% by mass, and still more preferably 2% by mass to 20% by mass, from the viewpoint of the aggregating effect of a dispersion component such as a pigment and the thickening effect of the water-soluble polymer B.

### -Water-

The treatment liquid in the present disclosure contains water.

As the water, for example, ion exchange water or the like can be used.

A content of water is not particularly limited, but is preferably in a range of 10% by mass or more, more preferably in a range of 30% by mass or more, and still more preferably in a range of 50% by mass or more with respect to a total mass of the treatment liquid.

The upper limit of the content of the water depends on a content of another component, but is, for example, 99% by mass, 90% by mass, 80% by mass, and the like.

### -Other Component-

The treatment liquid in the present disclosure may contain components other than the above components. Examples of other components include an organic solvent, a nitrogen-containing heterocyclic compound, an antifoaming agent, other additives, and the like.

### -Organic Solvent-

As the organic solvent, an organic solvent (hereinafter referred to as a water-soluble organic solvent) that is dissolved in 100 g of water at 20°C in an amount of 5 g or more is preferable.

As the water-soluble organic solvent, the same water-soluble organic solvent that can be contained in the ink composition can be used. Among these, from the viewpoint of curl suppression, polyalkylene glycol or a derivative thereof is preferable, and at least one selected from the group consisting of diethylene glycol monoalkyl ether (such as diethylene glycol monobutyl ether), triethylene glycol monoalkyl ether, dipropylene glycol, tripropylene glycol monoalkyl ether (such as tripropylene glycol monomethyl ether), polyoxypropylene glyceryl ether, and polyoxyethylene polyoxypropylene glycol is more preferable.

A content of the organic solvent in the treatment liquid is not particularly limited, but is preferably 1% by mass to 30% by mass and more preferably 5% by mass to 15% by mass with respect to a total mass of the treatment liquid, from the viewpoint of curl suppression.

### -Antifoaming Agent-

Examples of the antifoaming agent include a silicone-based compound (a silicone-based antifoaming agent), a pluronic-based compound (a pluronic-based antifoaming agent), and the like. Among these, a silicone-based antifoaming agent is preferable. As the silicone-based antifoaming agent, a silicone-based antifoaming agent containing a polysiloxane structure is preferable.

As the antifoaming agent, a commercially available product on the market may be used, and examples thereof include BYK-012, 017, 021, 022, 024, 025, 038, 094 (all of which are manufactured by BYK Japan KK.), KS-537, KS-604, KM-72F (all of which are manufactured by Shin-Etsu Chemical Co., Ltd.), TSA-739 (manufactured by Momentive Performance Materials Japan GK), OLFINE AF-104 (manufactured by Nissin Chemical co.,ltd.), and the like. Among these, the silicone-based antifoaming agents, BYK-017, 021, 022, 024, 025, 094, KS-537, KS-604, KM-72F, and TSA-739, are preferable, and from the viewpoint of jetting stability of ink, BYK-024 is particularly preferable.

In a case where the treatment liquid contains the antifoaming agent, a content of the antifoaming agent is preferably 0.0001% by mass to 1% by mass and more preferably 0.001% by mass to 0.1% by mass with respect to a total mass of the treatment liquid. In a case where a silicone-based antifoaming agent is used as the antifoaming agent, the silicone-based antifoaming agent is preferably contained in a silicone oil equivalent amount of 50 ppm to 200 ppm.

### -Physical Properties of Treatment Liquid-

### 1. Surface Tension

A surface tension of the treatment liquid is not particularly limited and may be, for example, 20 mN/m or more. From the viewpoint of coatability on a material subjected to recording, the surface tension is preferably 20 mN/m to 60 mN/m and more preferably 25 mN/m to 45 mN/m.

The surface tension of the treatment liquid uses the same measuring method as that of the ink composition.

The surface tension of the treatment liquid can be adjusted by, for example, adding a surfactant.

### 2. pH

The pH of the treatment liquid (25°C ± 1°C) is preferably in a range of 7.0 or less, more preferably 0.5 to 3.5, and still more preferably 0.5 to 2.0 from the viewpoint of the aggregation rate of the ink composition.

The pH is measured by the same measuring method as that of the ink composition.

### 3. Viscosity

The viscosity of the treatment liquid is preferably in a range of 1 mPa·s to 30 mPa·s, more preferably in a range of 1 mPa·s to 20 mPa·s, still more preferably in a range of 2 mPa·s to 15 mPa·s, and particularly preferably in a range of 2 mPa·s to 10 mPa·s from the viewpoint of the aggregation rate of the ink composition.

The viscosity is measured by the same measuring method as that of the ink composition.

The ink set of the present disclosure can be widely used for recording an image. Among various image recording method, an ink jet recording method of jetting an ink composition, in some cases a treatment liquid, from a jetting head by using an ink jet method to record an image can be suitably used.

### <Image Recording Method>

An image recording method of the present disclosure includes a step of applying the above described ink composition of the present disclosure to a recording medium and recording an image (hereinafter, also referred to as an ink applying step).

The image recording method of the present disclosure may include other steps, as necessary.

Since the image recording method of the present disclosure records an image by using the ink composition of the present disclosure, the same effect as that obtained by the ink composition of the present disclosure can be obtained by the image recording method of the present disclosure.

### -Recording Medium-

As the recording medium in the image recording method of the present disclosure, printing paper mainly composed of cellulose (for example, high-quality paper, coated paper, art paper) can be used.

As the recording medium, a commercially available recording medium can be appropriately selected, and examples thereof include high-quality paper (A) such as "OK Prince High Quality" manufactured by Oji Paper Co., Ltd., "Shiraoi" manufactured by Nippon Paper Industries Co., Ltd., and "New NPI high-quality" manufactured by Nippon Paper Industries Co., Ltd.; high-quality coated paper such as "Silver diamond" manufactured by Nippon Paper Industries Co., Ltd.; lightly coated paper such as "OK Everlight Coat" manufactured by Oji Paper Co., Ltd. and "Aurora S" manufactured by Nippon Paper Industries Co., Ltd.; lightweight coated paper (A3) such as "OK Coat L" manufactured by Oji Paper Co., Ltd. and "Aurora L" manufactured by Nippon Paper Industries Co., Ltd.; coated paper (A2, B2) such as "OK Top Coat +" manufactured by Oji Paper Co., Ltd. and "Aurora Coat" manufactured by Nippon Paper Industries Co., Ltd.; art paper (A1) such as "OK Kanto+" manufactured by Oji Paper Co., Ltd. and "Tokubishi Art" manufactured by Mitsubishi Paper Mills Limited; and the like. It is also possible to use various pieces of photographic paper for ink jet recording.

Among the recording media, so-called coated paper used for general offset printing and the like is preferable. The coated paper is provided with a coating layer obtained by applying a coating material to a surface of high-quality paper, alkaline paper, or the like, which is mainly composed of cellulose and is not generally surface-treated. Among these, coated paper containing a base paper and a coating layer containing kaolin and/or heavy calcium bicarbonate is preferable, and art paper, coated paper, and lightweight coated paper or lightly coated paper are more preferable.

From the viewpoint that the recording medium can be expected to have the effect of suppressing the movement of a coloring material, and a satisfactory high-quality image with better color density and hue that of the related art is obtained, a water absorption coefficient Ka is preferably 0.05 mL/m²·ms^{1/2} to 0.5 mL/m²·ms^{1/2}, more preferably 0.1 mL/m²·ms^{1/2} to 0.4 mL/m²·ms^{1/2}, and still more preferably 0.2 mL/m²·ms^{1/2} to 0.3 mL/m²·ms^{1/2}.

The water absorption coefficient Ka is synonymous with that described in JAPAN TAPPI Pulp and Paper Test Method No. 51: 2000 (Published by Japan Technical Association of the Pulp and Paper). The absorption coefficient Ka is a value calculated from the difference in the amount of water transferred between a contact time of 100 ms and a contact time of 900 ms using an automatic scanning liquid absorption meter KM500Win (manufactured by KUMAGAI RIKI KOGYO Co., Ltd.).

### -Ink Applying Step-

In the ink applying step, the ink composition of the present disclosure is applied onto a recording medium to record an image.

The Ink applying step may be a step of directly applying the ink composition of the present disclosure onto the recording medium, or may be a step of applying the ink composition of the present disclosure to a surface to which the treatment liquid of the recording medium is applied. The image recording method in the latter case further includes a treatment liquid applying step of applying the treatment liquid to the recording medium before the ink applying step. The treatment liquid applying step will be described later.

The method for applying the ink composition is not particularly limited as long as the ink composition can be applied onto the recording medium, and any aspect using a known method such as a coating method, a dipping method, or an ink jet method may be adopted. Among these, the ink jet method is suitable in that a film (for example, an image) can be formed on various recording media.

It is preferable to adopt an aspect in which the image is recorded by jetting the ink composition by an ink jet method.

The way of jetting the ink composition in the ink jet method is not particularly limited, and for example, any known methods such as an electric charge control method of jetting the ink composition using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet method, particularly, an ink jet method as a method described in JP1979-059936A (JP-S54-059936A), in which an ink composition subjected to an action of thermal energy undergoes a sudden volume change, and the ink composition is jetted from a nozzle by the action force due to this state change, can be effectively used.

As the ink jet method, a method described in paragraphs 0093 to 0105 of JP2003-306623A can also be applied.

The way of using the ink jet head also includes a shuttle method of performing recording while a short serial head is allowed to scan in the width direction of a medium subjected to recording, and a line method of using a line head in which recording elements are arranged correspondingly to the entire range of one side of a medium subjected to recording.

By the line method, an image can be recorded on the entire surface of the medium subjected to recording by the medium subjected to recording being scanned in a direction orthogonal to a direction in which the recording elements are arranged. In the line method, a transport system such as a carriage that allows the short head to perform scanning in the shuttle method is unnecessary. In addition, in the line method, as compared with the shuttle method, a carriage is not required to move, and a complicated scanning control with the medium subjected to recording is unnecessary, and only the medium subjected to recording moves. Therefore, according to the line method, an increase in the recording speed of an image is achieved as compared with the shuttle method.

The ink composition is preferably applied using an ink jet head having a resolution of 300 dpi or more (more preferably 600 dpi or more and still more preferably 800 dpi or more). Herein, dpi is an abbreviation for dot per inch, and 1 inch is 2.54 cm.

The amount of liquid droplets of the ink composition jetted from nozzles of the ink jet head is preferably 1 picoliter (pL) to 10 pL and more preferably 1.5 pL to 6 pL, from the viewpoint of obtaining a high-definition image.

In addition, from the viewpoint of suppressing unevenness of an image and improving a connection between continuous gradations, it is also effective to jet the ink composition by combining the different amount of liquid droplets.

### -Treatment Liquid Applying Step-

The image recording method in the present disclosure further includes a treatment liquid applying step of applying the treatment liquid onto the recording medium before the ink applying step. As the treatment liquid, the same treatment liquid as in the ink set of the present disclosure can be used.

In a case where the image recording method of the present disclosure includes the treatment liquid applying step, bleeding of the image is further suppressed.

The image recording method of the aspect including the treatment liquid applying step is preferably carried out by using the ink set of the present disclosure described above. That is, preferably, the ink applying step is carried out by using the ink composition in the above described ink set of the present disclosure, and the treatment liquid applying step is carried out by using the treatment liquid in the above described ink set.

In the treatment liquid applying step, the treatment liquid described above is applied onto the recording medium.

The treatment liquid can be applied to the recording medium by a known liquid application method, and for example, it is possible to select any method such as a coating method, an ink jet method, or a dipping method.

Examples of the coating method include size press methods such as a spray coating method, a horizontal size press method, and a calender size press method; knife coat methods such as an air knife coat method; roll coat methods such as a gate roll coat method, a direct roll coat method, a reverse roll coat method, and a squeeze roll coat method; blade coat methods such as a bill blade coat method; bar coat methods such as a rod bar coat method; cast coat methods; gravure coat methods; curtain coat methods; die coat methods; brush coat methods; and the like.

In addition, a coating method in which the coating amount is controlled by using a coating device provided with a liquid amount restriction member, such as a coating device described in JP1998-230201A (JP-H10-230201A) may be applied.

Regarding a region to which the treatment liquid is applied, the treatment liquid may be applied to the entire surface of the recording medium such that it is provided to the entirety of the recording medium, or alternatively, may be partially applied such that it is provided to a region to which the ink has been provided in the ink applying step. From the viewpoint of uniformly adjusting the amount of the treatment liquid to be applied, uniformly recording fine lines or fine image portions, and suppressing bleeding such as uneven density in an image, it is preferable to apply the treatment liquid to the entire recording medium such that it is provided to the entirety of the recording medium by a roll coat method using a coating roller.

Examples of a method for applying the treatment liquid to the recording medium by controlling the amount of the treatment liquid to be applied include a method using an anilox roller. An anilox roller refers to a roller of which a surface is coated with ceramic by thermal spraying and processed with a laser such that a pyramidal shape, a diagonal line, a testudinal shape, or the like is formed thereon. The anilox roller can be used to transfer and apply the treatment liquid by allowing the treatment liquid to enter a recessed portion attached to the roller surface and coming into contact with the recording medium. In this case, a controlled amount of the treatment liquid can be applied according to the size of the recess of the anilox roller.

### -Other Steps-

The image recording method of the present disclosure can include an Ink drying step, a heat fixing step, an ink removing step, and the like, as necessary.

### (a) Ink Drying Step

After applying the ink composition, the applied ink composition may be heated and dried.

Examples of means for performing heating and drying include known heating means such as a heater, known blowing means such as a dryer, and means combining these.

Examples of a heating and drying method include a method for applying heat with a heater or the like to an opposite side to a surface of the recording medium to which the ink composition is applied, a method for applying hot air or heated air to a surface of the recording medium to which the ink composition is applied, a method for applying heat with an infrared heater to a surface to which the ink composition is applied or to an opposite side to the surface of the recording medium to which the ink composition is applied, and a method obtained by combining a plurality of these, and the like.

The heating temperature during heating and drying is preferably 55°C or higher, more preferably 60°C or higher, and particularly preferably 65°C or higher. The upper limit of the heating temperature is not particularly limited, but for example, the upper limit can be 150°C and is preferably 130°C.

The time for heating and drying the ink composition is not particularly limited, but is preferably 3 seconds to 60 seconds, more preferably 5 seconds to 60 seconds, and still more preferably 10 seconds to 30 seconds.

The recording medium may be heated in advance before the ink composition is applied.

The heating temperature may be appropriately set, but the temperature of the recording medium is preferably 20°C to 50°C, and more preferably 25°C to 40°C.

### (b) Heat Fixing Step

As necessary, the heat fixing step may be carried out after the Ink drying step.

The image is fixed on the recording medium by application of a heat fixing treatment, and the resistance of the image to abrasion can be further enhanced. As the heat fixing step, for example, a heat fixing step described in paragraphs 0112 to 0120 of JP2010-221415A can be applied.

### (c) Ink Removing Step

In the ink removing step, as necessary, the ink composition (for example, an ink solid adhered by drying) adhered to the jetting head used for ink jet recording is removed by a maintenance liquid. Regarding the details of the maintenance liquid and the ink removing step, the maintenance liquid and the ink removing step described in WO2013/180074A can be applied.

### Examples

Hereinafter, Examples of the present invention will be described in more detail. The present disclosure is not limited to the following Examples unless departing from the gist.

### [Example 1]

### <Preparation of Pigment Dispersion Polymer A-1>

A monomer composition was prepared by mixing 172 g of methacrylic acid (MAA), 828 g of benzyl methacrylate (BzMA), and 375 g of isopropanol.

Separately from the above, an initiator composition was prepared by mixing 22.05 g of 2,2-azobis(2-methylbutyronitrile) and 187.5 g of isopropanol.

Next, 187.5 g of isopropanol was heated to 80°C under a nitrogen atmosphere, and a mixture of the above described monomer composition and the above described initiator composition was added dropwise thereto for 2 hours. After completion of the dropwise addition, the obtained solution was kept at 80°C for another 4 hours and then cooled to 25°C. After cooling, a solvent was removed under reduced pressure to obtain a pigment dispersion polymer A-1 (BzMA:MAA= 82.8:17.2 [mass ratio]) as the pigment dispersion polymer A.

A composition of the obtained pigment dispersion polymer A-1 was confirmed by ¹H-NMR The pigment dispersion polymer A-1 contained a carboxy group as an acid group in the molecule, and an acid value was 112 mgKOH/g. A Mw of the pigment dispersion polymer A-1 was 30,000.

### <Preparation of Cyan Pigment Dispersion 1>

0.8 equivalent of the amount of methacrylic acid in the pigment dispersion polymer A-1 (150 g) obtained as described above was neutralized with an aqueous potassium hydroxide solution. After neutralization, ion exchange water was further added so that a concentration of the pigment dispersion polymer A-1 was 25% by mass to prepare the pigment dispersion polymer A-1, thereby obtaining an aqueous solution of the pigment dispersion polymer A-1.

124 parts of an aqueous solution of the pigment dispersion polymer A-1, 48 g of Pigment Blue 15:3 (phthalocyanine blue A220, manufactured by Dainichiseika Color&Chemicals Mfg.Co.,Ltd.), 75 g of water, and 30 g of dipropylene glycol were mixed. The mixed solution was dispersed by a beads mill using zirconia beads (bead diameter 0.1 mmcp) until a desired volume average particle diameter was obtained, thereby obtaining a dispersion (uncrosslinked dispersion) having a pigment concentration of 15% by mass.

Next, 1.3 g of Denacol EX-321 (crosslinking agent; manufactured by Nagase ChemteX Corporation) and 14.3 g of an aqueous boric acid solution (boric acid concentration: 4% by mass) were added to 136 g of the above uncrosslinked dispersion. After reacting at 50°C for 6 and a half hours, the mixture was cooled to 25°C to obtain a crosslinked dispersion.

Next, ion exchange water is added to the above crosslinked dispersion, and ultrafiltration was carried out using a stirring type ultra holder (manufactured by Advantec Toyo Kaisha, Ltd.) and an ultrafiltration filter (manufactured by Advantec Toyo Kaisha, Ltd., molecular weight cut-off 50,000, Q0500076E ultrafilter).

Next, the crosslinked dispersion was purified so that a concentration of dipropylene glycol in the crosslinked dispersion was 0.1% by mass or less. Then, the cyan pigment dispersion 1 was obtained by concentration until the pigment concentration was 15% by mass.

The cyan pigment dispersion 1 contains a polymer-coated pigment containing a cyan pigment and the pigment dispersion polymer A-1 adhering to a part or all of the surface of the cyan pigment. The pigment dispersion polymer A-1 is crosslinked by a crosslinking agent.

### <Water-soluble Polymer B-1>

A 500 mL three-neck flask equipped with a stirrer, a thermometer, a reflux condenser, and a nitrogen gas introduction tube was charged with propylene glycol (82 g) and heated to 90°C under a nitrogen stream. Here, A mixed solution obtained by mixing 1.57 g of PERBUTYL O (radical polymerization initiator; manufactured by NOF CORPORATION), 15 g of 2-methachroyloxyethyl acid phosphate (P-1M), 45 g of methyl methacrylate (MMA), isobornyl methacrylate (IBOMA; a constitutional unit represented by General Formula (B)), 10 g of acryloyl morpholine (ACMO; a constitutional unit represented by General Formula (1)), 1.84 g of dodecyl mercaptan, and 152 g of propylene glycol was added dropwise at a constant rate under a dropwise addition condition in which the dropwise addition was completed in 3 hours. After completion of the dropwise addition of the mixed solution, a mixture was stirred for 4 hours. Subsequently, 12 g of a 24% by mass sodium hydroxide aqueous solution (alkali metal hydroxide) was added dropwise to the obtained reaction mixture by using a dropping funnel to obtain a solution of a water-soluble polymer B-1.

A composition of the solution of the obtained water-soluble polymer B-1 was confirmed by ¹H-NMR, and a solid content concentration of the solution of the water-soluble polymer B-1 was 30.1% by mass.

The water-soluble polymer B-1 contained a phosphoric acid group as an acid group in the molecule, and an acid value was 40 mgKOH/g. The water-soluble polymer B-1 had a weight-average molecular weight (Mw) of 15,000, and a glass transition temperature (Tg) of 118°C.

Next, it was confirmed that the polymer B-1 was a water-soluble polymer, by the following method (see the "Property" column in Table 1).

First, 1 g of a sample (that is, a polymer) obtained by drying a solution of a polymer at 150°C for 6 hours under reduced pressure is prepared. 100 g of water at 25°C is added to 1 g of the prepared polymer, and the mixture is heated under reflux for 30 minutes. The temperature of the obtained liquid is lowered to 25°C, and the mixture is left to stand at 25°C for 1 hour. By visually observing the liquid that has been left to stand, it is determined that the polymer is a "water-soluble polymer" in a case where the entire polymer is dissolved, and the polymer is a "water-insoluble polymer" in a case where a part or the entire polymer is not dissolved.

### [Example 1]

### <Preparation of Cyan Ink C-1>

By using the cyan pigment dispersion 1 containing the pigment dispersion polymer A-1 and the polymer B-1 that is the water-soluble polymer B, and various components are mixed to have the following composition, thereby preparing a mixed solution. After the preparation, coarse particles were removed from the mixed solution with a 5 µm filter to prepare a cyan ink C-1 as the ink composition.

The cyan ink C-1 had a viscosity of 4.1 mPa·s (25°C), a surface tension was 38.4 mN/m (25°C), and a pH was 8.9 (25°C).

### -Composition of Cyan Ink C-1-

| | |
|---|---|
| • Cyan pigment (Pigment Blue 15:3, manufactured by Dainichiseika Color&Chemicals Mfg.Co.,Ltd.) | 3.0% by mass |
| • Pigment dispersion polymer A-1 (pigment dispersion polymer A) | 2.0% by mass |
| • Water-soluble polymer B-1 (water-soluble polymer B) | 2.0% by mass (in terms of solid content) |
| Propylene glycol (PG; manufactured by FUJIFILM Wako Pure Chemical Corporation) | 20.0% by mass |
| • Glycerin | 5% by mass |
| • OLFINE E1010 (manufactured by Nissin Chemical co.,ltd., nonionic surfactant) | 1.25% by mass |
| • Ion exchange water | in an amount of total 100% by mass |

### <Preparation of Treatment Liquid 1>

Individual components in the following composition were mixed to obtain a treatment liquid 1 containing an acid as the aggregation component.

The treatment liquid 1 thus obtained had a viscosity of 4.5 mPa·s (25°C), a surface tension of 41.0 mN/m (25°C), and pH of 0.1 (25°C).

### -Composition of Treatment Liquid 1-

| | |
|---|---|
| TPGmME (tripropylene glycol monomethyl ether) | 4.8% by mass |
| DEGmBE (diethylene glycol monobutyl ether | 4.8% by mass |
| Malonic acid (acid) | 16.0% by mass |
| Malic acid (acid) | 7.8% by mass |
| Propane tricarboxylic acid (acid) | 3.5% by mass |
| Phosphoric acid 85% by mass aqueous solution (acid) | 15.0% by mass |
| Antifoaming agent (TSA-739 (15% by mass), manufactured by Momentive | |
| Performance Materials Japan GK; emulsion type silicone antifoaming agent) | 0.07% by mass in terms of silicone oil |
| • Ion exchange water | in an amount of total 100% by mass |

### <Image Recording>

As a recording medium, an OK top coat (manufactured by Oji Paper Co., Ltd.) was fixed on a stage operating at 500 mm/sec, and the treatment liquid 1 was applied on the fixed recording medium with a wire bar coater at about 1.7 g/m², and immediately after that, the recording medium was dried at 50°C for 2 seconds. Thereafter, a line head (printer head GELJET GX5000 manufactured by Ricoh Co., Ltd.) arranged at an angle with respect to a moving direction of the recording medium was used to jet the cyan ink C-1 to a treatment liquid-applied surface of the recording medium under jetting conditions of a resolution of 1200 × 1200 dots per inch (dpi), the jetting amount of 2.4 picolitre (pL), and a stage speed of 635 mm/sec, and a cyan solid image having a size of 20 mm × 100 mm was recorded. Immediately after recording, the recording medium is placed on a hot plate at 60°C in contact with a surface opposite to the image recording surface of the recording medium, and hot air at 120°C is blown onto the image recording surface for 10 seconds using a dryer to be dried.

### <Measurement and Evaluation>

The following measurements and evaluations were carried out by using the above described ink and treatment liquid.

The results are shown in Table 1.

### (1. Bleeding)

The recording medium on which the image was recorded was visually observed, a state of the occurrence of bleeding was evaluated, and a degree of landing interference between ink droplets in the image was used as an index for evaluation.

A degree of the occurrence of landing interference in a case where the treatment liquid acted in the ink composition varies depending on a rate at which the water-soluble polymer in the ink composition precipitates and thickens (so-called aggregation rate). Therefore, in a case where the aggregation rate during the image recording is insufficient (that is, a case where the aggregation property is low), the adjacent ink droplets interfere with each other, and the landed ink droplets move. As a result, failure (bleeding) in which line thicknesses were uneven in a case where fine lines were recorded occurs. By using this phenomenon, the degree of landing interference of the ink composition was evaluated by evaluating a state of bleeding.

Specifically, the evaluation was carried out as follows.

A commercially available ink jet printer (DMP-2831 manufactured by FUJIFILM Dimatix, Inc.) was prepared as an ink jet recording device, and each of the obtained ink compositions was loaded into the ink jet printer. Then, fine lines each of which has a width of 2 dots were recorded with a length of 5 cm on a substrate made of polyvinyl chloride heated at 40°C (manufactured by Avery Dennison, AVERY 400 GLOSS WHITE PERMANENT). After the jetting was stopped, the bleeding of the obtained fine lines was visually observed, and the bleeding was evaluated.

In the following evaluation standard, the rank in which bleeding is most suppressed is A.

### -Evaluation Standard for Bleeding-

A: There is almost no bleeding, and a thickness of each fine line is uniform.
B: There is slight bleeding, but a thickness of each fine line is uniform.
C: There is bleeding and a part of fine lines is thick, but there is no problem in practical use.
D: A state in which bleeding is remarkable and fine lines become thicker, which causes practical problems.

### (2. Blocking)

As a recording medium, Tokubishi Art Double Sided N (manufactured by Mitsubishi Paper Mills Limited) was fixed on a stage operating at 500 mm/sec, and the treatment liquid is applied on the fixed recording medium with a wire bar coater at about 1.7 g/m², and immediately after that, the recording medium was dried at 50°C for 2 seconds. Thereafter, a line head (printer head GELJET GX5000 manufactured by Ricoh Co., Ltd.) arranged at an angle with respect to a moving direction of the recording medium was used to jet the cyan ink C-1 to a treatment liquid-applied surface of the recording medium under jetting conditions of a resolution of 1200 × 1200 dpi and the jetting amount of 3.5 pL, and a cyan solid image having a size of 20 mm × 100 mm was recorded. Immediately after recording, the recording medium is placed on a hot plate at 60°C in contact with a surface opposite to the image recording surface of the recording medium, and hot air at 120°C is blown onto the image recording surface for 10 seconds using a dryer to be dried, and the result was adopted as an image sample.

The image sample was cut to obtain two rectangular sample pieces each of which has a size of 12 mm × 8 mm.

Next, the two sample pieces were arranged so that the image recording surfaces faced each other, and the four corners were aligned and overlapped. A load of 720 N was applied to the two overlapped sample pieces for 10 seconds under environmental conditions of 25°C and 50% RH, and the image recording surfaces were brought into close contact with each other. Then, the two sample pieces were peeled off and evaluated based on the following evaluation standard.

In the following evaluation standard, the rank in which blocking is most suppressed is A.

### -Evaluation Standard for Blocking-

A: the sample pieces peel off naturally, or there was resistance during the peeling off, but no color transfer of the sample pieces was observed.
B: Color transfer of the sample pieces was observed in a range of less than 10% of the area of the solid image portion, but this is a range that does not hinder practical use.
C: Color transfer of the sample pieces is observed in a range of 10% or more and less than 20% of the area of the solid image portion, which is a range that does not hinder practical use.
D: Color transfer of the sample pieces is observed in a range of 20% or more of the area of the solid image portion, which is a range that causes a practical problem.

### (3. Jettability)

A line image of 75 × 2400 dpi was recorded by jetting cyan ink under the following ink application conditions without applying the treatment liquid on the recording medium ("Picture (registered trademark) Photo Finishing Pro", manufactured by FUJIFILM Corporation), and was dried. The center value of the lines using the dot analyzer DA-6000 (trade name, manufactured by Oji Measuring Instruments Co., Ltd.) was measured with respect to the dried line image to obtain a distance (deviation amount) from the center value of the line image, thereby calculating a standard deviation (σ). The jettability (inclined jetting) was evaluated based on the following evaluation standard using the calculated value of σ as an index.

In the following evaluation standard, the rank of the most excellent jettability is A.

### -Ink Application Conditions-

- Head: Using 1,200 dot per inch (dpi)/20 inch width piezo full line head
- Amount of Jetted liquid droplets: 2.4 pL
- Drive frequency: 12 kHz (transportation speed of recording medium 500 mm/sec)

### -Evaluation Standard for Jettability (Inclined Jetting)-

A: σ < 4 µm
B: 4 µm ≤ σ < 6 µm
C: 6 µm ≤ σ < 10 µm
D: σ > 10 µm

### (4. Head Maintainability)

10 µL of cyan ink was added dropwise on a slide glass to form a cyan ink film, and the ink film was left to stand at a temperature of 25°C under atmospheric pressure, and dried. 1 mL of water was added dropwise onto the dried ink film (ink solid), and the ink film was left to stand at a temperature of 25°C for 10 minutes. Then, the solubility and dispersibility of the ink solid in water were evaluated based on the following evaluation standard.

A value of"%" in the following evaluation standard is based on an area. That is, the value of "%" is a proportion of an area of the ink solid remaining on the slide glass in a case where the area of the ink solid existing region before water dropwise addition (a projected area of the slide glass in a direction perpendicular to a surface on which the ink was added dropwise) is 100%.

In the following evaluation standard, the rank of the most excellent head maintainability is A.

### -Evaluation Standard for Head Maintainability-

A: The ink solid is completely dissolved or dispersed in water, and no undissolved residue was confirmed on the slide glass.
B: The ink solid remains on the slide glass, but the amount of the residue is less than 30% of the ink solid before water dropwise addition.
C: The ink solid remains on the slide glass, but the amount of the residue is 30% or more and less than 60% of the ink solid before water dropwise addition.
D: The ink solid remains on the slide glass, and the amount of the residue is 60% or more of the ink solid before water dropwise addition.

### [Examples 2 to 5, 10 to 15, 20 to 24, and 30]

The same operation as in Example 1 was carried out for the synthesis of the water-soluble polymer B by changing types and/or polymerization conditions of a raw material monomer, except that the composition of the constitutional unit, Mw, and the like of the water-soluble polymer B were changed as shown in Tables 1 and 2.

The results are shown in Tables 1 and 2.

As a result of confirming the properties of the water-soluble polymer B in these Examples (that is, whether it is water-soluble or water-insoluble) by the same method as that for the polymer B-1, the water-soluble polymer B was water-soluble as shown in Tables 1 and 2.

### [Examples 6 to 9]

The same operation as in Example 12 was carried out, except that the content of the water-soluble polymer B with respect to a total mass of the ink was changed as shown in Table 1.

The results are shown in Table 1.

### [Examples 16 and 17]

The same operation as in Example 30 was carried out, except that a degree of neutralization of the acid group in the water-soluble polymer B was changed as shown in Table 1.

The results are shown in Table 1.

As a result of confirming the properties of the water-soluble polymer B in these Examples (that is, whether it is water-soluble or water-insoluble) by the same method as that for the polymer B-1, the water-soluble polymer B was water-soluble as shown in Table 1.

### [Examples 18 and 19]

The same operation as in Example 30 was carried out, except that the type of the base used for neutralizing the acid group in the water-soluble polymer B was changed as shown in Table 1.

The results are shown in Table 1.

As a result of confirming the properties of the water-soluble polymer B in these Examples (that is, whether it is water-soluble or water-insoluble) by the same method as that for the polymer B-1, the water-soluble polymer B was water-soluble as shown in Table 1.

### [Examples 25 to 27, 31, and 32]

The same operation as in Example 30 was carried out, except that the composition of the water-soluble organic solvent in the ink composition was changed as shown in Tables 1 and 2.

The results are shown in Tables 1 and 2.

### [Example 28]

The same operation as in Example 12 was performed, except that the treatment liquid was not used.

The result is shown in Table 2.

### [Example 29]

The same operation as in Example 30 was carried out, except that the acid in the treatment liquid 1 was changed to calcium acetate (solid content is 5.0% by mass).

The result is shown in Table 2.

### [Examples 33 to 40]

The same operation as in Example 1 was carried out for the synthesis of the water-soluble polymer B by changing types and/or polymerization conditions of a raw material monomer, except that the composition of the constitutional unit, Mw, and the like of the water-soluble polymer B were changed as shown in Table 2, and the composition of the water-soluble organic solvent in the ink composition was changed as shown in Table 2.

The result is shown in Table 2.

As a result of confirming the properties of the water-soluble polymer B in these Examples (that is, whether it is water-soluble or water-insoluble) by the same method as that for the polymer B-1, the water-soluble polymer B was water-soluble as shown in Table 2.

### [Example 41]

In the preparation of the pigment dispersion polymer A-1, a solution of the pigment dispersion polymer A-3 (C18MA:St:AA = 20:60:20 [mass ratio]) was prepared in the same manner as in the preparation of the solution of the pigment dispersion polymer A-1, except that types, amounts, and the like of the acid group and monomer used in the preparation were changed as shown in Table 2 below.

### • C18MA: Stearyl Methacrylate

A composition of the obtained pigment dispersion polymer A-3 was confirmed by ¹H-NMR The pigment dispersion polymer A-3 contained a carboxy group as an acid group in the molecule, an acid value was 156 mgKOH/g, and Mw was 50,000.

The same operation as in Example 40 was carried out, except that the pigment dispersion polymer A-3 was used instead of the pigment dispersion polymer A-1.

The result is shown in Table 2.

### [Comparative Examples 1 to 3]

The same operation as in Example 1 was carried out for the synthesis of the water-soluble polymer B by changing types and/or polymerization conditions of a raw material monomer, except that the composition and the like of the constitutional unit of the water-soluble polymer B were changed as shown in Table 2.

The results are shown in Tables 1 and 2.

### [Comparative Example 4]

The same operation as in Example 1 was carried out, except that polymer particles 1 described below made of a water-insoluble polymer (comparative polymer) were used instead of the water-soluble polymer B.

The results are shown in Tables 1 and 2.

### -Details of Polymer Particles 1-

The polymer particles 1 made of a water-insoluble polymer (comparative polymer) were prepared as follows.

360 g of methyl ethyl ketone was put into a 2 L three-neck flask provided with a stirrer, a thermometer, a reflux condencer, and a nitrogen gas introduction tube, and then heated to 75°C. While maintaining the temperature inside a reaction container at 75°C, a mixed solution consisting of 36 g of methacrylic acid (MAA), 36 g of acryloylmorpholine (ACMO), 72 g of dicyclopentanyl methacrylate (DCPMA), 216 g of methyl methacrylate (MMA), 1.44 g of "V-601" (radical polymerization initiator; manufactured by FUJIFILM Wako Pure Chemical Corporation), 72 g of methyl ethyl ketone was added dropwise at a constant rate such that the dropwise addition was completed in 2 hours. After the dropwise addition was completed, a solution consisting of 0.72 g of "V-601" and 36 g of methyl ethyl ketone was added, and the mixture was stirred at 75°C for 2 hours, then heated to 85°C, and further stirred for 2 hours. Next, 390 g of isopropanol and 209 ml of a 1 mol/L NaOH aqueous solution were added thereto, and the temperature inside the reaction container was raised to 80°C Next, 720 g of distilled water was added dropwise at a rate of 20 ml/min to disperse the water. Then, a solvent was distilled off by keeping the temperature inside the reaction container at 80°C for 2 hours, 85°C for 2 hours, and 90°C for 2 hours under atmospheric pressure. Thereafter, the pressure inside the reaction container was further reduced, and a total amount of 856 g of isopropanol, methyl ethyl ketone, and distilled water were distilled off, thereby obtaining an aqueous dispersion of the polymer particles 1 (emulsion) having a concentration of solid contents of 28.0% by mass.

As a result of confirming the property of the polymer in the polymer particles 1 (that is, whether it is water-soluble or water-insoluble) by the same method as that for the polymer B-1, the polymer in the polymer particles 1 was water-insoluble as shown in Table 2. That is, the polymer in the polymer particles 1 is a water-insoluble polymer that is a comparative polymer.

### [Comparative Example 5]

The same operation as in Example 2 was carried out, except that polymer particles 1 described below made of a water-insoluble polymer (comparative polymer) were used instead of the water-soluble polymer B.

The results are shown in Tables 1 and 2.

### -Details of Polymer Particles 2-

Polymer particles 2 consisting of the water-insoluble polymer were prepared by the same operation as that of the polymer particles 1, except that a mixed solution consisting of 36 g of methacrylic acid (MAA), 72 g of dicyclopentanyl methacrylate, 252 g of methyl methacrylate (MMA), 1.44 g of "V-601", and 72 g of methyl ethyl ketone was used as a dropwise addition liquid.

As a result of confirming the property of the polymer in the polymer particles 2 (that is, whether it is water-soluble or water-insoluble) by the same method as that for the polymer B-1, the polymer in the polymer particles 2 was water-insoluble as shown in Table 2. That is, the polymer in the polymer particles 2 is a water-insoluble polymer that is a comparative polymer.

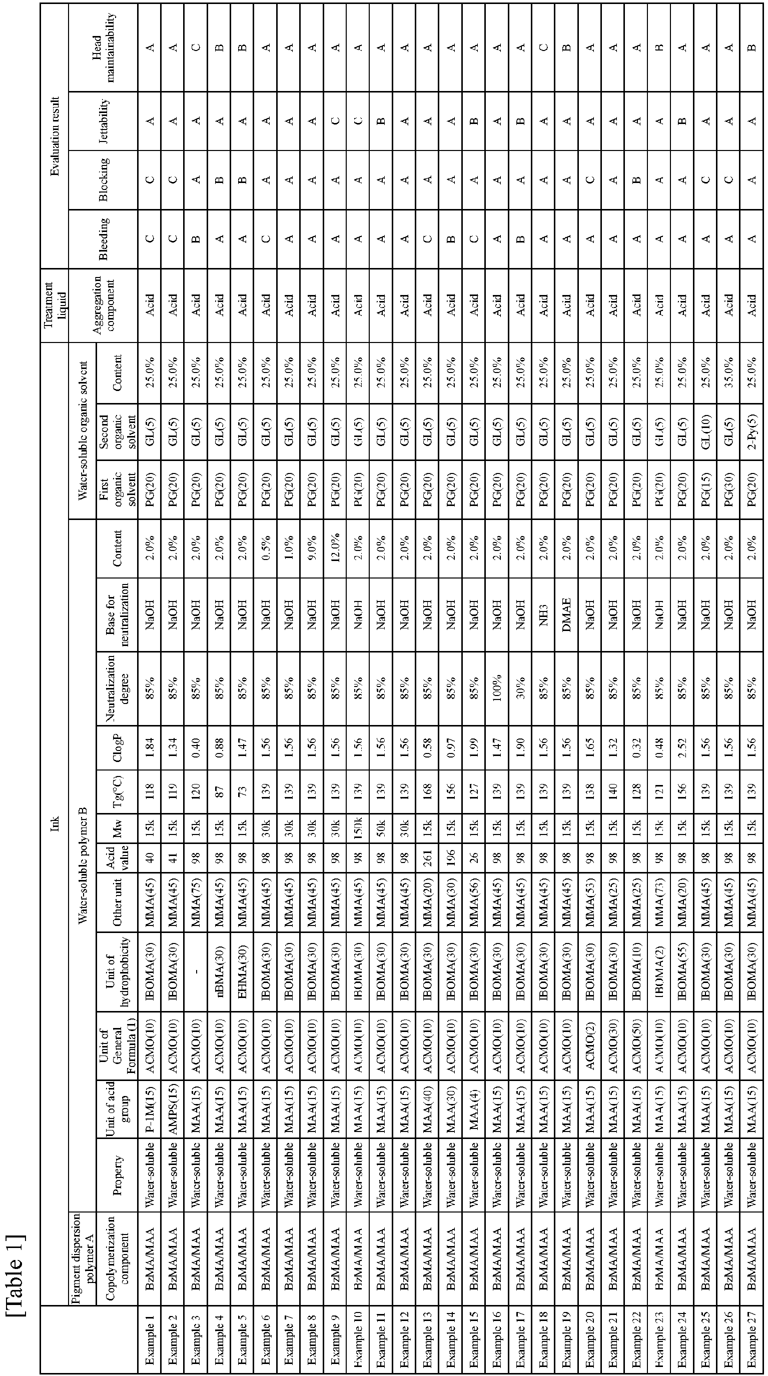

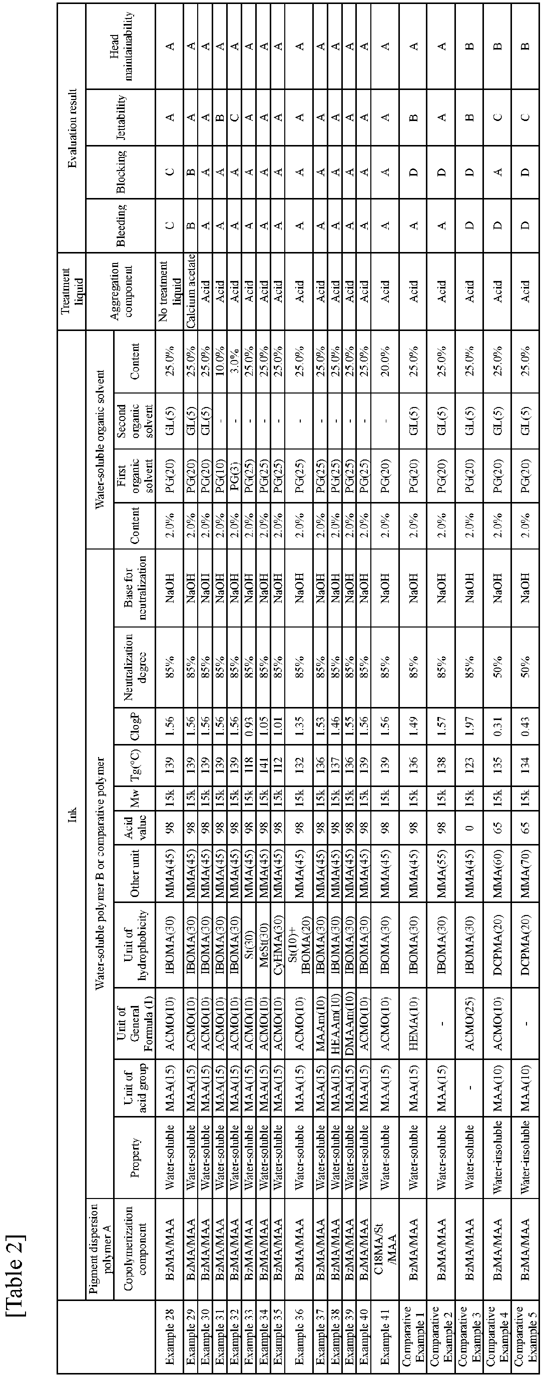

Details of each material in Tables 1 and 2 are as follows.
. BzMA: Benzyl methacrylate (FUJIFILM Wako Pure Chemical Corporation)
. C18MA: Stearyl Methacrylate (FUJIFILM Wako Pure Chemical Corporation)
. St: Styrene (FUJIFILM Wako Pure Chemical Corporation)
. MeSt: Methylstyrene (FUJIFILM Wako Pure Chemical Corporation)
. MAA: Methacrylic acid (FUJIFILM Wako Pure Chemical Corporation)
. MMA: Methyl methacrylate (FUJIFILM Wako Pure Chemical Corporation)
. ACMO: Acryloylmorpholine (KJ Chemicals Corporation, a compound represented by General Formula (1))
MAAm: Methacrylamide (FUJIFILM Wako Pure Chemical Corporation, a compound represented by General Formula (1))
HEAAm: Hydroxyethylacrylamide (KJ Chemicals Corporation, a compound represented by General Formula (1))
. DMAAm: Dimethylacrylamide (FUJIFILM Wako Pure Chemical Corporation)
HEMA: 2-Hydroxyethyl methacrylate (FUJIFILM Wako Pure Chemical Corporation)
. IBOMA: Isobornyl methacrylate (FUJIFILM Wako Pure Chemical Corporation)
. NBMA: n-Butyl methacrylate (FUJIFILM Wako Pure Chemical Corporation)
. EHMA: 2-Ethylhexyl methacrylate (Tokyo Chemical Industry Co., Ltd.)
. AMPS: Monomer with the following structure (Tokyo Chemical Industry Co., Ltd.)
. P-1M: Monomer with the following structure (Kyoeisha Chemical Co., Ltd.)
. CyHMA: Cyclohexylmethacrylate (Tokyo Chemical Industry Co., Ltd.; a monomer forming the constitutional unit represented by General Formula (B))
• DCPMA: Dicyclopentanyl methacrylate (Tokyo Chemical Industry Co., Ltd.; a monomer forming the constitutional unit represented by General Formula (B))
. PG: Propylene glycol (FUJIFILM Wako Pure Chemical Corporation)
. GL: Glycerin (FUJIFILM Wako Pure Chemical Corporation)
. 2-Py: 2-Pyrrolidone (FUJIFILM Wako Pure Chemical Corporation)
. NaOH: Sodium hydroxide (FUJIFILM Wako Pure Chemical Corporation)
NH3: Ammonia (FUJIFILM Wako Pure Chemical Corporation)
. DMAE: Dimethylaminoethanol (FUJIFILM Wako Pure Chemical Corporation)

Furthermore, in Table 1, the unit of acid value is mgKOH/g, the unit of content "%" is % by mass, the numerical value in parentheses of each constitutional unit name in the water-soluble polymer B column is a mass ratio of each constitutional unit, and the numerical value in parentheses after the solvent name in each of the first organic solvent column and the second organic solvent column is a mass ratio of each solvent.

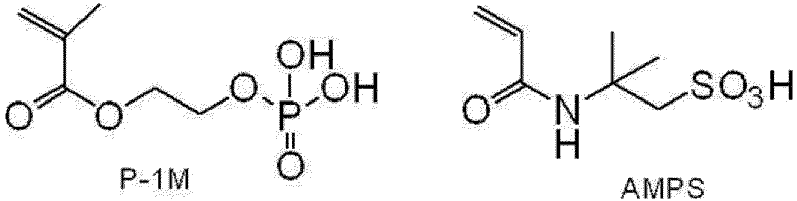

As shown in Tables 1 and 2, in each Example in which the ink containing the water-soluble polymer B that contains the specific acid group and the constitutional unit represented by the formula (1) was used, the occurrence of the bleeding and blocking of the image were suppressed.

On the other hand, in Comparative Examples 1 and 2 in which the water-soluble polymer in the ink did not contain the constitutional unit represented by the formula (1), the image blocking could not be suppressed.

In Comparative Example 3 in which the water-soluble polymer in the ink did not contain the specific acid group, the bleeding and blocking of the image could not be suppressed.

In Comparative Examples 4 and 5 in which the ink did not contain the water-soluble polymer and contained the water-insoluble polymer (that is, polymer particles), bleeding of the image could not be suppressed.

It can be seen from the results of Examples 3 to 5, 20, and 33 to 36 that the maintainability of the ink jet head is more excellent in a case where the water-soluble polymer B further contains at least one constitutional unit selected from the group consisting of the constitutional unit represented by General Formula (A) and the constitutional unit represented by General Formula (B) (Examples 4, 5, 30, and 33 to 36).

Among Examples 4, 5, 30, and 33 to 36, it can be seen that the maintainability of the ink jet head is particularly excellent in a case where the water-soluble polymer B contains at least one constitutional unit selected from the group consisting of the constitutional unit represented by General Formula (a) and the constitutional unit represented by any one of General Formulae (b-1), (b-2), (b-3), or (b-4) (Examples 30, and 33 to 36).

It can be seen from the results of Examples 6 to 9 and 12 that the content of the water-soluble polymer B in the ink is 1% by mass to 10% by mass (Examples 7, 8, and 12), thereby further suppressing the bleeding of the image and improving the jettability of the ink.

It can be seen from the results of Examples 10 to 12, and 30 that the weight-average molecular weight of the water-soluble polymer B is 5,000 to 100,000 (Examples 11, 12, and 30), thereby further improving the jettability of the ink.

It can be seen from the results of Examples 13 to 15, and 30 that the acid value of the water-soluble polymer B is 28 mgKOH/g to 230 mgKOH/g (Examples 13, 14, and 30), thereby further suppressing the bleeding of the image.

It can be seen from the results of Examples 1, 2, and 30 that the water-soluble polymer B contains a carboxylic acid group (Example 30), thereby further suppressing the bleeding and blocking of the image.

It can be seen from the results of Examples 16, 17, and 30 that the water-soluble polymer B contains a carboxylic acid group and the neutralization degree of the carboxylic acid group is 40% by mol or more (Examples 16 and 30), thereby further suppressing the bleeding of the image and improving the jettability of the ink.

It can be seen from the results of Examples 18, 19, and 30 that the acid group of the water-soluble polymer B is neutralized with a base, and the base is a hydroxide of an alkali metal or an organic amine having a boiling point of 80°C or higher (Examples 19 and 30), thereby further improving the maintainability of the ink jet head.

It can be seen from the results of Examples 20 to 22, and 30 that in the water-soluble polymer B, the content ratio of the constitutional unit represented by General Formula (1) is 3% by mass to 45% by mass with respect to the total constitutional unit of the water-soluble polymer B (Examples 21 and 30), thereby further suppressing the image blocking.

It can be seen from the results of Examples 25 and 30 that the ink composition further contains the water-soluble organic solvent, the water-soluble organic solvent contains the first organic solvent having a boiling point of 110°C to 240°C and the second organic solvent having a boiling point of 245°C to 300°C, and the mass ratio of the content of the second organic solvent to the content of the first organic solvent is 0 to 0.3 (Example 30), thereby further suppressing the image blocking.

It can be seen from the results of Examples 26 and 30 that the total amount of the first organic solvent and the second organic solvent is 5% by mass to 30% by mass with respect to the total mass of the ink composition (Example 30), thereby further suppressing the image blocking.

It can be seen from the results of Examples 27 and 30 that in Example 30 in which each of the first organic solvent and the second organic solvent contains at least one alcohol-based organic solvent selected from the group consisting of ethylene glycol, diethylene glycol, propylene glycol, triethylene glycol, dipropylene glycol, glycerin, and an alkyl ether thereof, and the ratio of the alcohol-based organic solvent to the total amount of the first organic solvent and the second organic solvent is 90% by mass or more, the maintainability of the ink jet head is further improved.

It can be seen from the results of Examples 28 to 30 that the image is recorded by using the ink and the treatment liquid containing the aggregation component (Examples 29 and 30), thereby further suppressing the image blocking.

In particular, in a case where a monovalent, divalent, or trivalent acid is contained as the aggregation component (Example 30), it can be seen that the bleeding and blocking of the image are further suppressed.

## Claims

1. An ink composition comprising:
water;
a pigment;
a pigment dispersion polymer A; and
a water-soluble polymer B different from the pigment dispersion polymer A,
wherein the water-soluble polymer B contains at least one acid group selected from the group consisting of a phosphoric acid group, a sulfonic acid group, and a carboxylic acid group, and a constitutional unit represented by General Formula (1), 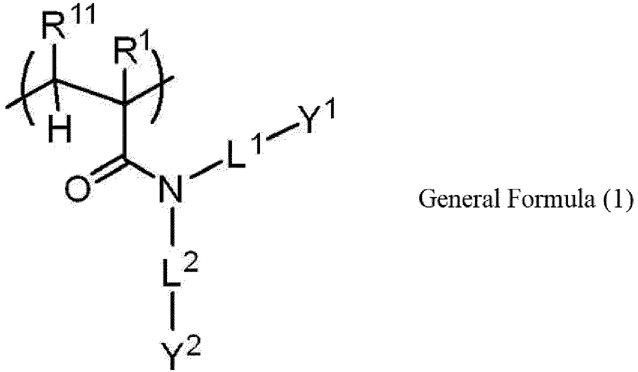
in the Formula, R¹ represents a hydrogen atom or a methyl group,
R¹¹ represents a hydrogen atom, a carboxylic acid group, or a carbamoyl group,
L¹ and L² each independently represent a divalent linking group that is one kind selected from the group A consisting of an alkylene group, an alkenylene group, an alkynylene group, -O-, and -C(=O)-, a divalent linking group that is obtained by combining two or more kinds selected from the group A, or a single bond,
Y¹ and Y² each independent represent a hydrogen atom, -OH, -R², -OR², -NH₂, -NHR², -NR²R³, or -SH,
R² and R³ each independently represent an alkyl group, an alkenyl group, an alkynyl group, or an aryl group, and
Y¹ and Y² may be bonded to each other to form a nitrogen-containing heterocycle with L¹, L², and N.

2. The ink composition according to claim 1,
wherein the water-soluble polymer B further contains at least one constitutional unit selected from the group consisting of a constitutional unit represented by General Formula (A) and a constitutional unit represented by General Formula (B), 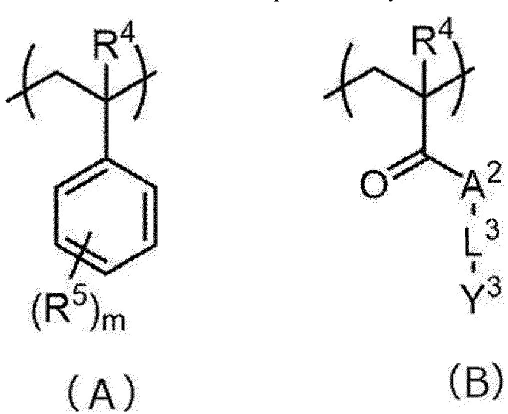
in the Formulae, R⁴'s each independently represent a hydrogen atom or a methyl group,
R⁵'S each independently represent an alkyl group, an alkenyl group, or an alkynyl group,
m is an integer of 0 to 5,
A² represents a single bond or -O-,
L³ represents a divalent linking group that is one kind selected from the group B consisting of an alkylene group, an alkenylene group, an alkynylene group, -O-, and -C(=O)-, a divalent linking group that is obtained by combining two or more kinds selected from the group B, or a single bond, and
Y³ represents an alkyl group having 4 to 22 carbon atoms, an alkenyl group having 4 to 22 carbon atoms, an alkynyl group having 4 to 22 carbon atoms, a cycloalkyl group having 4 to 22 carbon atoms, or an aryl group having 6 to 22 carbon atoms.

3. The ink composition according to claim 2,
wherein the water-soluble polymer B contains, as the constitutional unit represented by General Formula (A) or General Formula (B), at least one constitutional unit selected from the group consisting of a constitutional unit represented by General Formula (a) and a constitutional unit represented by any one of General Formulae (b-1), (b-2), (b-3), or (b-4), 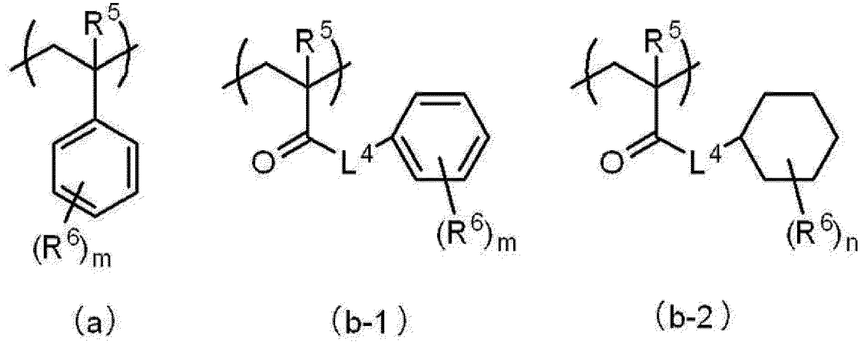 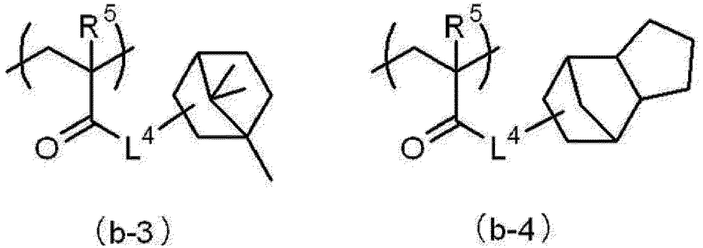
in the Formulae, R⁵'s each independently represent a hydrogen atom or a methyl group,
R⁶'s each independently represent an alkyl group, m represents an integer of 0 to 5, and n represents an integer of 0 to 11, and
L⁴'s each independently represent a divalent linking group that is one kind selected from the group C consisting of an alkylene group having 1 to 18 carbon atoms, -O-, and -C(=O)-, a divalent linking group that is obtained by combining two or more kinds selected from the group C, or a single bond.

4. The ink composition according to claim 3,
wherein a total content ratio of the constitutional unit represented by General Formula (a) and the constitutional unit represented by any one of General Formulae (b-1), (b-2), (b-3), or (b-4) in the water-soluble polymer B is 5% by mass to 50% by mass with respect to all constitutional units of the water-soluble polymer B.

5. The ink composition according to any one of claims 1 to 4,
wherein a content of the water-soluble polymer B is 1% by mass to 10% by mass with respect to a total mass of the ink composition.

6. The ink composition according to any one of claims 1 to 5,
wherein a weight-average molecular weight of the water-soluble polymer B is 5,000 to 100,000.

7. The ink composition according to any one of claims 1 to 6,
wherein an acid value of the water-soluble polymer B is 28 mgKOH/g to 230 mgKOH/g.

8. The ink composition according to any one of claims 1 to 7,
wherein the water-soluble polymer B contains a carboxylic acid group as the acid group, and
40% by mol or more of the carboxylic acid group is neutralized with a base.

9. The ink composition according to claim 8,
wherein the base is a hydroxide of an alkali metal or an organic amine having a boiling point of 80°C or higher.

10. The ink composition according to any one of claims 1 to 9,
wherein a content ratio of the constitutional unit represented by General Formula (1) in the water-soluble polymer B is 3% by mass to 45% by mass with respect to all constitutional units of the water-soluble polymer B.

11. The ink composition according to any one of claims 1 to 10,
wherein the water-soluble polymer B has a glass transition temperature of 80°C or higher.

12. The ink composition according to any one of claims 1 to 11,
wherein the ink composition further contains a water-soluble organic solvent,
the water-soluble organic solvent contains a first organic solvent having a boiling point of 110°C to 240°C, and a second organic solvent having a boiling point of 245°C to 300°C, and
a mass ratio of a content of the second organic solvent to a content of the first organic solvent is 0 to 0.3.

13. The ink composition according to claim 12,
wherein a total amount of the first organic solvent and the second organic solvent is 5% by mass to 30% by mass with respect to a total mass of the ink composition.

14. The ink composition according to claim 12 or 13,
wherein each of the first organic solvent and the second organic solvent is at least one alcohol-based organic solvent selected from the group consisting of ethylene glycol, diethylene glycol, propylene glycol, triethylene glycol, dipropylene glycol, glycerin, and an alkyl ether thereof, and
a ratio of the alcohol-based organic solvent to a total amount of the first organic solvent and the second organic solvent is 90% by mass or more.

15. An ink set comprising:
the ink composition according to any one of claims 1 to 14; and
a treatment liquid that contains water and at least one selected from the group consisting of a polyvalent metal salt, an acidic compound, and a cationic polymer.

16. The ink set according to claim 15,
wherein the acidic compound contains a monovalent, divalent, or trivalent acid.

17. An image recording method comprising a step of applying the ink composition according to any one of claims 1 to 14 to record an image on a recording medium.
